# EUROPEAN PATENT APPLICATION

(11) **EP 4 815 583 A1**
(43) Date of publication of application: **30.09.2026**
(21) Application number: 26163834.0
(22) Date of filing: 11.03.2026
(51) Int. Cl.: H04W 56/00, H04B 7/0413, H04L 5/00, H04W 16/14, H04W 24/02, H04L 7/00, H04W 84/12

(54) **CARRIER FREQUENCY PLANNING AND SOUNDING RESULT REUSE IN BEAMFORMING**

(30) Priority: 12.03.2025 US 202563770844 P; 06.05.2025 US 202563800713 P; 13.02.2026 US 202619540049
(71) Applicant: Samsung Electronics Co., Ltd., Suwon-si, Gyeonggi-do 16677 (KR)
(72) Inventor: YAN, Aiguo, San Jose, CA, 95134 (US); YANG, Zigui, San Jose, CA, 95134 (CN); JEON, Eunsung, 16677 Suwon-si, Gyeonggi-do (KR)
(74) Representative: Kuhnen & Wacker Patent- und Rechtsanwaltsbüro PartG mbB

(57) **Abstract**

A system and a method are disclosed for carrier frequency planning in beamforming. The method comprises transmitting (1210), with a first access point, AP1, an AP1 frequency reference frame at an AP1 carrier frequency *f*_{c1} and obtaining (1220), with a second access point, AP2, a synchronized AP2 carrier frequency *f*_{*c*2} based on the AP1 carrier frequency *f*_{*c*1}. The method further comprises transmitting (1230), with the AP2, an AP2 frequency alignment frame using the synchronized AP2 carrier frequency *f*_{*c*2}. Also disclosed are system and methods for sounding results reuse.

## Description

### TECHNICAL FIELD

The disclosure generally relates to beamforming in wireless networks. More particularly, the subject matter disclosed herein relates to improvements to carrier frequency planning and sounding result reuse in beamforming.

### SUMMARY

In wireless networks, an access point (AP) can serve as a hub for a plurality of wireless network devices referred to as stations (STAs). The STAs are typically within a service area of an associated AP. The STAs may be fixed, mobile, semi-fixed, etc. The STAs may be communicatively coupled with at least the associated AP. That is, a given STA may be associated with only one AP but can communicate with non-associated APs. In addition, the STAs associated with a given AP typically do not communicate directly with each other within the wireless network. However, the STAs may have additional localized wireless features, such as Bluetooth, non-AP associated wireless fidelity (Wi-Fi) networks, ad hoc mesh networks, etc. A given STA can be in a service area of two or more APs. For example, an STA may be in a first service area associated with a first AP (AP1), a second service area associated with a second AP (AP2), and/or etc.

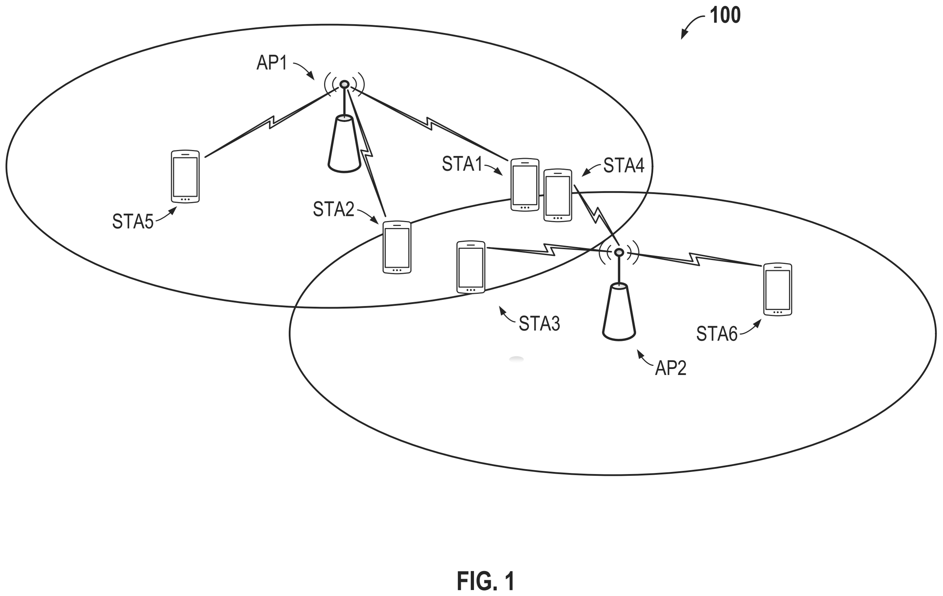

FIG. 1 is a schematic of a system 100 including an overlapping basic service set (OBSS) between AP1 and AP2 according to an embodiment.

Referring to FIG. 1, six STAs are shown, where four of the STAs are located in service areas associated with both AP1 and AP2. Associations between the six STAs and their respective APs are illustrated as comm-links depicted by lightning bolts. As shown in FIG. 1, STA1, STA2, and STA5 may be associated with AP1. STA3, STA4, and STA6 are shown as associated with AP2. As can also be appreciated, STA1, STA2, STA3, and STA4 are in an overlapping service area.

It should be appreciated that standards may use differing terms for similar functions. Accordingly, "access point" or "AP" may be used interchangeably with other terms, such as a "base station," "station functioning as an access point," etc. As described herein, a wireless network of an AP and its associated STAs can be referred to as a basic service set (BSS). The term "OBSS" can refer to wireless networks that partially overlap. From a geographical perspective, OBSS can be viewed as overlapping service areas.

An AP can be any configuration of hardware and software comprising a backhaul equipment for connecting to a wired network, a baseband processor for signal processing of a baseband signal, a modulating unit to modulate and demodulate between the baseband signal and a wireless signal (e.g., received or to be transmitted), and an antenna that transmits and receives the transmission signal. The antenna may include arrays capable of shaping the antenna's radiation patterns into directional communication beams using, for example, constructive interference between signals emitted by radiating elements of the arrays.

Interference can occur in the transmission signals between a STA and one or more APs. For STAs in the OBSS, the interference can be due to a mismatch between subcarrier frequencies of the beams used in the various transmission modes including coordinated beamforming (Co-BF), multi-user (MU)-multiple input, multiple output (MIMO), and/or single user (SU)-MIMO. The Co-BF allows the APs of OBSSs to coordinate their respective transmissions to a given STA. Accordingly, the overlapping beams at the STA may experience inter-channel interference (ICI) if carrier frequencies of the APs are not sufficiently aligned. The interference can also be due to a transmission that does not fully null at a STA not intended for the transmission in any of the transmission modes.

To solve this problem, carrier frequency synchronization can occur between two or more APs. The carrier frequency values of the APs can be shared over the backhaul connection.

One issue with the above approach is that carrier frequency synchronization may be perceived as being a costly overhead.

To overcome these issues, systems and methods are described herein for frequency planning in beam forming. The frequency planning may include performing single-user or joint sounding and using the results of those soundings to modify a carrier frequency of one of the APs to be closer to the carrier frequency of the other AP.

The above approaches improve on previous methods because the sounding results can be reused. In addition, backhaul based carrier frequency synchronization can be avoided.

In an embodiment, a method carrier frequency planning comprises transmitting, with AP1, an AP1 frequency reference frame at an AP1 carrier frequency *f*_{*c*1} and obtaining, with AP2, a synchronized AP2 carrier frequency *f*_{*c*2} based on the AP1 carrier frequency *f*_{*c*1}. The method can also include transmitting, with AP2, a frequency alignment frame using the synchronized AP2 carrier frequency *t*_{c2}.

In an embodiment, a system for carrier frequency planning comprises an AP1 configured to transmit a AP1 frequency reference frame at an AP1 carrier frequency *f*_{*c*1} and an AP2 configured to obtain an AP2 carrier frequency *f*_{*c*2} based on the AP1 carrier frequency *f*_{*c*1} and transmit an AP2 frequency alignment frame using the synchronized AP2 carrier frequency *t*_{c2}.

In an embodiment, a method for sounding result reuse comprises determining, with the AP1, an alignment of an AP1 carrier frequency *f*_{*c*1} relative to prior sounding results and transmitting, with the AP1, an AP1 data transmission frame using the AP1 carrier frequency *f*_{*c*1} and a sounding result of the prior sounding results.

In an embodiment, a system for sounding result reuse comprises an AP1 configured to determine an alignment of an AP1 carrier frequency *f*_{*c*1} relative to prior sounding results and transmit an AP1 data transmission frame using the AP1 carrier frequency *f*_{*c*1} and a sounding result of the prior sounding results.

### BRIEF DESCRIPTION OF THE DRAWING

In the following section, the aspects of the subject matter disclosed herein will be described with reference to exemplary embodiments illustrated in the figures, in which:
FIG. 1 is a schematic of a system 100 including an OBSS between AP1 and AP2 according to an embodiment.
FIG. 2 depicts a frequency spectrum 200 of an OFDM signal according to an embodiment.
FIG. 3 depicts a sequence diagram 300 of sounding with subsequent data transmissions according to an embodiment.
FIG. 4 depicts a sequence diagram 400 for frequency planning and sounding result reuse in beamforming according to an embodiment.
FIG. 5 depicts a sequence diagram 500 for frequency planning and sounding result reuse in beamforming according to an embodiment.
FIG. 6 depicts a sequence diagram 600 for frequency planning and sounding result reuse in beamforming according to an embodiment.
FIG. 7 depicts a sequence diagram 700 for frequency planning and sounding result reuse in beamforming according to an embodiment.
FIG. 8 depicts a carrier frequency diagram 800 for frequency planning and sounding result reuse in beamforming according to an embodiment.
FIG. 9 shows a table 900 of values obtained based on soundings for a system including two APs and six STAs, such as the system 100 shown in FIG. 1.
FIG. 10 shows a relative scale of a frequency difference tolerance comparison 1000.
FIG. 11 is an invite/response sequence diagram 1100 according to an embodiment.
FIG. 12 is a method 1200 for carrier frequency planning according to an embodiment.
FIG. 13 is a method 1300 for sounding result reuse according to an embodiment.
FIG. 14 is a block diagram of an electronic device in a network environment, according to an embodiment.
FIG. 15 is a block diagram of a transmitter 1500 in an access point according to an embodiment.
FIG. 16 shows a system 1600 including an AP1 1610, an AP2 1620, and a STA 1630.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The quality of a transmission between an AP and an STA can be encapsulated in a channel state information (CSI) report. A CSI report may include information on the physical layer measurements of the condition of a transmission channel. The CSI report can contain information related to fading, scattering, power decay, etc. of a signal propagating through the transmission channel. The CSI report may be based on statistical, instantaneous, or similar determined values. The CSI reports can be based on channel state estimation procedures that use, for example, a CSI reference signal (e.g., training signal) sent over the transmission channel. The CSI report may indicate how well a STA will receive data transmitted by an AP.

The CSI reference signals may be used in sounding techniques. The sounding techniques may involve an AP sending the reference signal to an STA and the STA subsequently responding with information on how well the STA received the reference signal. For example, the reference signal may comprise a training signal (e.g., Short Training Fields, Long Training Fields, etc.) of known sequences transmitted on OFDM subcarriers. The training signal can be transmitted by an AP during sounding of an STA. Accordingly, sounding may refer to sending a training signal over a particular transmission channel, such as between transmit and receive antennas, to generate a CSI report about the transmission channel.

At least two types of sounding may be employed: sequential sounding and joint sounding. In sequential sounding, the training signals from multiple APs are sent sequentially to an STA. In joint sounding, the training signals can be sent simultaneously from multiple APs to a STA. The STA can measure the training signals from the multiple APS. The STA may respond simultaneously with information about how well the training signals were heard. Joint sounding can be more efficient than sequential sounding.

The terms "intra-BSS" and "cross-BSS" can be used to distinguish transmissions between an AP and associated STAs from transmissions between the AP and non-associated STAs. For example, a reference signal transmitted by an AP to an associated STA may be referred to as an intra-BSS reference signal. Conversely, a reference signal transmitted from an AP to a non-associated STA may be referred to as a cross-BSS reference signal. Accordingly, training signals sent by an AP to associated and non-associated STAs can respectively be referred to as intra-BSS sounding and cross-BSS sounding.

With reference to FIG. 1, the STAs in the OBSS may be sounded with intra-BSS and cross-BSS training signals transmitted by the two APs. The STA receiving intra-BSS and the cross-BSS sounding may accordingly provide an intra-BSS and a cross-BSS CSI report via a CSI feedback to an associated AP. The AP receiving the CSI reports can provide the cross-BSS CSI and/or the intra-BSS CSI reports to the other AP.

The cross-BSS CSI reports can be used by the APs in Co-BF procedures. With more particularity, sequential and/or joint sounding can be used to generate and share cross-BSS CSI reports so that the APs can perform Co-BF. These processes may be governed by standards. For example, The Institute of Electrical and Electronics Engineers (IEEE) P802.11bn/D0.1 standard defines explicit feedback mechanisms, e.g., Ultra High Reliability Trigger Based (UHR TB) sequential/joint null data packet (NDP) sounding, for in-BSS sounding and cross-BSS sounding to measure and report the CSI. However, following the standards' procedures can result in one AP without another AP's cross-BSS CSI report.

Co-BF may be adversely affected by inter-carrier interference (ICI). ICI results when subcarriers of two beams have a frequency mismatch. The mismatch sufficient to cause ICI may be very small, on the order of parts-per-billion (ppb). By way of illustration, a 5 giga-hertz (GHz) channel may have a frequency alignment tolerance of 350 Hz or less. This specification may be due to the orthogonality principle of orthogonal frequency division multiplication (OFDM).

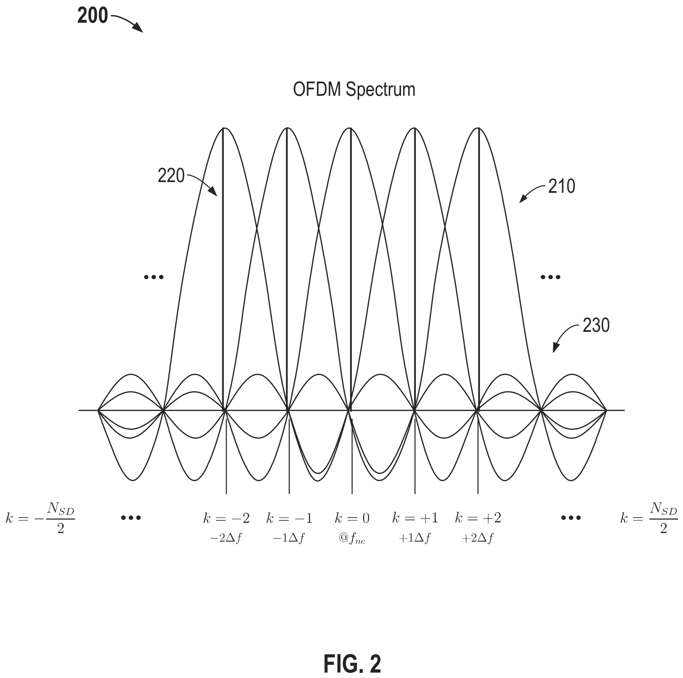

FIG. 2 depicts a frequency spectrum 200 of an OFDM signal according to an embodiment.

Referring to FIG. 2, the frequency spectrum 200 includes a plurality of subcarriers 210 for a signal having a nominal carrier frequency *f_{nc}*. The plurality of subcarriers 210 include center frequencies 220 that lie in nulls 230 of other subcarriers 210. This is known as an orthogonality principle. The orthogonality principle ensures that ICI is minimized in a single beam. However, when two or more beams overlap, such as when Co-BF occurs at an STA, then interference can occur between the plurality of subcarriers 210.

In the plurality of subcarriers 210, each subcarrier has a center frequency where adjacent subcarrier center frequencies are spaced apart by a fixed frequency spacing. The subcarrier spacing *Δf* is the inverse of the useful symbol duration: *Δf =* 1/*T*, where *T* is the OFDM symbol duration before adding a cyclic prefix. The subcarrier center frequencies may be indicated with a subcarrier index *k* as shown in FIG. 2. The subcarrier index *k* has a value of zero for the center most or DC subcarrier.

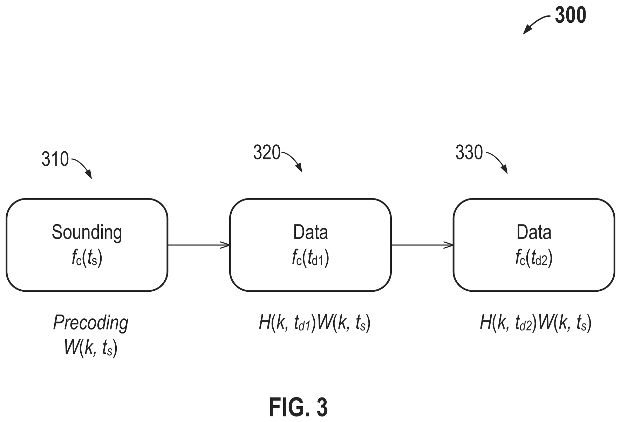

FIG. 3 depicts a sequence diagram 300 of sounding with subsequent data transmissions according to an embodiment.

Referring to FIG. 3, the sequence diagram 300 includes a sounding 310, followed by a first data transmission 320 and a second data transmission 330. The sounding 310 and first and second data transmissions 320, 330 may be made using a nominal carrier frequency *f_{c}*. The sounding 310 may occur at a sounding time *tₛ* and the first and second data transmissions 320, 330 may occur respectively at a first and second data transmission time *t*_{*d*1}, *t*_{*d*2}. The second data transmission time *t*_{*d*2} may be subsequent the first data transmission time *t*_{*d*1} which may be subsequent the sounding time *tₛ*.

The purpose of the sounding 310 may be to gather channel information, such as a CSI from the STAs. The CSI can be used to optimize data transmission during beam forming and/or MIMO transmissions, such as SU-MIMO and MU-MIMO. MIMO can involve the use of multiple antennas used to transmit and receive multiple streams of data. For example, a 4x4 MIMO may refer to the four transmit antennas at an AP and four receiving antennas at a station. The SU and MU modifiers may refer to whether or not a single or multiple STAs are receiving the MIMO data streams.

The sounding 310 may be a single or joint sounding. In a single sounding, an AP may send an NDPA followed by a null data packet (NDP). The NDPA may be broadcast by an AP to all of the STAs of the BSS and nearby APs. The NDPA may contain information regarding the NDP to be sent. The NDPA allows for devices to synchronize and prepare for the NDP. The NDP may be a data empty frame that includes a preamble having one or more training signals for a measurement of the sounding. Joint sounding may be similar to the single sounding in that an NDPA and NDP are sent. However, the NDP are sent by a plurality of APs.

Referring to FIG. 3, the sounding 310 can result in a precoding matrix *W*(*k, tₛ*). The precoding matrix *W(k, tₛ*) can include information regarding each channel used in the sounding 310. The index *k* may be referred to as a subcarrier index *k* indicating a particular subcarrier, such one of the plurality of subcarriers 210 described with reference to FIG. 2. The precoding matrix *W(k, tₛ*) can include information related to the channels where *W*(*k, tₛ*) is a precoding matrix obtained from a sounding at a sounding time *tₛ*.

A first channel matrix *H*(*k, t*_{*d*1}) may include CSI between an AP and a STA at the first data transmission time *t*_{*d*1}. Similarly, second channel matrix *H(k, t*_{*d*2}) may include CSI at the second data transmission time *t*_{*d*2}. The channel matrices *H(k, t*_{*d*1}), *H(k, t*_{*d*2}) may be different at the two different data transmission times *t*_{*d*1} , *t*_{*d*2} . In addition, the beam forming based on the *H(k, t*_{*d*1})*W*(*k, tₛ*) and *H(k, t*_{*d*2})*W*(*k, tₛ*) include the precoding matrix *W*(*k, tₛ*) determined at the sounding time *tₛ*. Accordingly, the beamforming may or may not be suitable at the first and second data transmission time *t*_{*d*1}, *t*_{*d*2}.

The actual channel conditions may change between the first data transmission time *t*_{*d*1} and the second data transmission time *t*_{*d*2}. The actual channel condition can change due to various reasons, such as for example, movement of the station STA, changes in the spatial features, multipath variation, etc. The possibility of the actual channel condition changing may be referred to as CSI staleness. That is, the probability that the CSI report obtained at sounding time *tₛ* may not accurately reflect the actual channel conditions. However, a change in an AP's carrier frequency *f_{c}* between the sounding time *tₛ* and the first and second data transmission times *t*_{*d*1}, *t*_{*d*2} may not adversely affect the reliability of the data transmission. Accordingly, sounding results may be reusable.

In addition, during Co-BF, it may be desirable to for AP1 and AP2 to have the same or about the same carrier frequency when in transmitting data. That is, a carrier frequency sync between AP1 and AP2 in Co-BF may be desirable: *f*_{*c*1}(*t*_{*d*1}) *= f*_{*c*2}(*t*_{*d*1}). The carrier frequency sync may be desirable due to ICI if the AP carrier frequencies are not substantially the same. Whether or not the AP carrier frequencies are substantially the same may be determined by comparing to a carrier frequency sync threshold. An exemplary carrier frequency sync threshold can be specified in various ways, such as for example parts-per-million (ppm) or parts-per-billion (ppb), specified frequency value, etc.

It may also be desirable for frequency tracking between AP1 and AP2 at different sounding times. For example, it may be desirable to track the AP2 carrier frequency at a second sounding time *f*_{*c*2}(*t*_{*s*2}) and the AP2 carrier frequency at a fourth sounding time *f*_{*c*1}(*t*_{*s*4})*.* However, frequency sounding alignment can be done with interpolation later during a beamforming time. The sequential cross-BSS can be used to track and verify an AP's carrier frequency. AP frequency tracking can be instructed implicitly (e.g., via the cross-BSS sounding) or explicitly (e.g., a flag in an NDPA).

With respect to quantities, the carrier frequency synchronization threshold may be a very small value relative to the carrier frequency value to prevent ICI, such as 350 Hz, or the like for a channel having a nominal carrier frequency of 5 gigahertz (GHz). A subcarrier spacing in, for example, the 11ax/be/bn may be specified as 312.5 kHz/4, which can be equivalent to 78.125 kHz. Between two APs, the difference may be up to two times 140 kHz, which is equal to 280 kHz. The 280 kHz value is greater than three subcarrier spacings. ICI may therefore be present even with a very small amount of carrier frequency synchronization error, such as on the order of parts-per-billion (ppb) or, as a numerical example, the error specification of 350 Hz. Since the frequency difference between two APs can be significantly larger than these specifications, frequency tracking is needed in Co-BF transmissions.

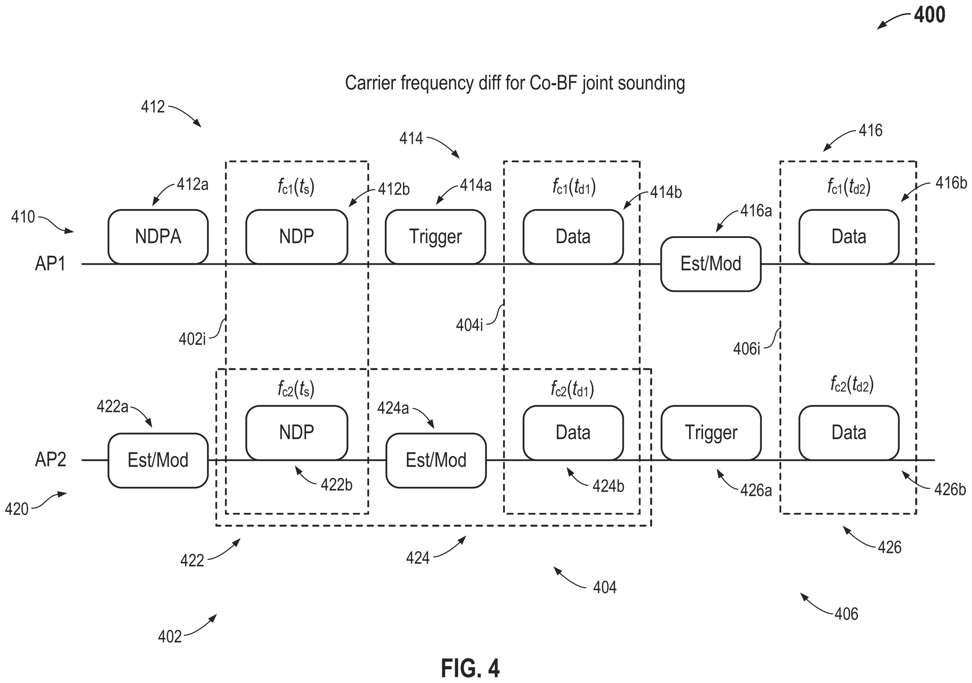

FIG. 4 depicts a sequence diagram 400 for frequency planning in beamforming according to an embodiment.

Referring to FIG. 4, the sequence diagram 400 may include transmission sequences between AP1 and AP2. AP1 and AP2 are indicated respectively by AP1 and AP2 sequences 410, 420 of time domain transmissions or processing sequences along corresponding lines. Transmissions from AP1 and AP2 may be indicated by a block in the AP1 sequence 410 adjacent the corresponding line and a transmission from AP2 to AP1 may be indicated by a block in the AP2 sequence 420 adjacent the corresponding line. Blocks AP2 or AP2 sequences 410, 420 that lie on the corresponding line may indicate that AP1 or AP2 are performing processing, which may be result of a sequentially simultaneous transmission from the other of AP1 or AP2.

The sequence diagram 400 may also include a sounding sequence 402, a first data sequence 404, and a second data sequence 406. The sounding sequence 402 may correspond to the sounding 310 described with reference to FIG. 3. The first and second data sequences 404, 406 may similarly correspond to the first and second data transmissions 320, 330 described with reference to FIG. 3.

The sounding sequence 402 may be comprised of frames that include training signals, such as an NDPA, NDP, etc., that can be used to obtain CSI. The first and second data sequences 404, 406 may be comprised of data sequences that rely on the CSI obtained during the sounding sequences 402. For example, referring to FIGS. 3 and 4, the first and second data sequences 404, 406 may utilize a precoding matrix similar to the precoding matrix *W(k, tₛ*) determined at a sounding time *tₛ*, which in FIG. 4 may be during the sounding sequence 402.

The AP1 sequence 410 can include an AP1 sounding sequence 412, an AP1 first data sequence 414, and an AP1 second data sequence 416. The AP2 sequence 420 may include an AP2 sounding sequence 422, an AP2 first data sequence 424, and an AP2 second data sequence 426.

The sounding sequence 402 can include the AP1 sounding sequence 412 and the AP2 sounding sequence 422. The AP1 sounding sequence 412 may include an AP1 sounding sequence NDPA 412a and an AP1 sounding sequence NDP 412b. The AP2 sounding sequence 422 may include an AP2 sounding sequence Est/Mod block 422a and an AP2 sounding sequence NDP 422b.

The first data sequence 404 can include the AP1 first data sequence 414 and the AP2 first data sequence 424. The second data sequence 406 can include the AP1 second data sequence 416 and the AP2 second data sequence 426. The AP1 first data sequence 414 may include an AP1 first data sequence trigger 414a and an AP1 first data sequence transmission 414b. The AP2 first data sequence 424 may include an AP2 first data sequence Est/Mod block 424a and an AP2 first data sequence transmission 424b.

The second data sequence 406 may include an AP1 second data sequence 416 and an AP2 second data sequence 426. The AP1 second data sequence 416 may include an AP1 second data sequence Est/Mod block 416a and an AP1 second data sequence data transmission 416b. The AP2 second data sequence 426 may include an AP2 second data sequence trigger 426a and an AP2 second data sequence data transmission 426b.

The sounding sequence 402 may also include an AP1 sounding sequence potential ICI transmissions 402i. The AP1 sounding sequence potential ICI transmissions 402i may include the AP1 sounding sequence NDP 412b and an AP2 sounding sequence NDP 422b.

The first data sequence 404 may include a first data sequence potential ICI transmissions 404i. The first data sequence potential ICI transmission 404i may include the AP1 first data sequence data transmission 414b and the AP2 first data sequence data transmission 424b.

The second data sequence 406 may include a second data sequence potential ICI transmissions 406i. The second data sequence potential ICI transmissions 406i may include the AP1 second data sequence data transmission 416b and the AP2 second data sequence data transmissions 426b.

Referring to the sounding sequence 402, AP1 may transmit the AP1 sounding sequence NDPA 412a. AP2 may receive the AP1 sounding sequence NDPA 412a. AP2 estimate the AP1 carrier frequency *f*_{*c*1} based on the AP1 sounding sequence NDPA 412a at the AP2 sounding sequence Est/Mod block 422a. AP2 may also modify the AP2 carrier frequency *f*_{*c*2} to match the estimated AP1 carrier frequency *f*_{*c*1} at the AP2 sounding sequence Est/Mod block 422a.

AP1 may transmit the AP1 sounding sequence NDP 412b at the AP1 carrier frequency *f*_{*c*1}. At about the same time, AP2 may transmit the AP2 sounding sequence NDP 422b at the estimated AP2 carrier frequency *f*_{*c*2}. The AP1 sounding sequence NDP 412b and the AP2 sounding sequence NDP 422b may potentially experience ICI. However, because the estimated AP2 carrier frequency *f*_{*c*2} may match the AP1 carrier frequency *f*_{*c*1}, the sounding sequence potential ICI transmissions 402i may not include ICI.

Referring to the first data sequence 404, the AP1 first data sequence trigger 414a may be transmitted from AP1 and received by AP2. AP2 may receive the AP1 first data sequence trigger 414a. AP2 may estimate the AP1 carrier frequency *f*_{*c*1} based on the received AP1 first data sequence trigger 414a. AP2 may modify the AP2 carrier frequency *f*_{*c*2} to match the estimated AP1 carrier frequency *f*_{*c*1}.

AP1 may transmit the AP1 first data sequence data transmission 414b. AP2 may transmit the AP2 first data sequence data transmission 424b. The AP1 first data sequence data transmission 414b and the AP2 first data sequence data transmission 424b could potentially experience ICI. However, because the modified AP2 carrier frequency *f*_{*c*2} may match the AP1 carrier frequency *f*_{*c*2}, the first data sequence potential ICI transmissions 404i may not include ICI.

Referring to the second data sequence 406, AP2 may transmit the AP2 second data sequence trigger 426a. AP1 may receive the AP2 second data sequence trigger 426a. AP1 may estimate the AP2 carrier frequency *f*_{*c*2} based on the received AP2 second data sequence trigger 426a at the AP1 second data sequence Est/Mod block 416a. AP1 may also modify the AP1 carrier frequency *f*_{*c*1} to match the estimated AP2 carrier frequency *t*_{c2}.

AP1 may transmit the AP1 second data sequence data transmission 416b. At about the same time, AP2 may transmit the AP2 second data sequence data transmission 426b. The AP1 second data sequence data transmission 416b and the AP2 second data sequence data transmission 426b could potentially experience ICI. However, because the modified AP1 carrier frequency *f*_{c1} may match the estimated AP2 carrier frequency *f*_{c2}, the second data sequence potential ICI transmissions 406i may not include ICI.

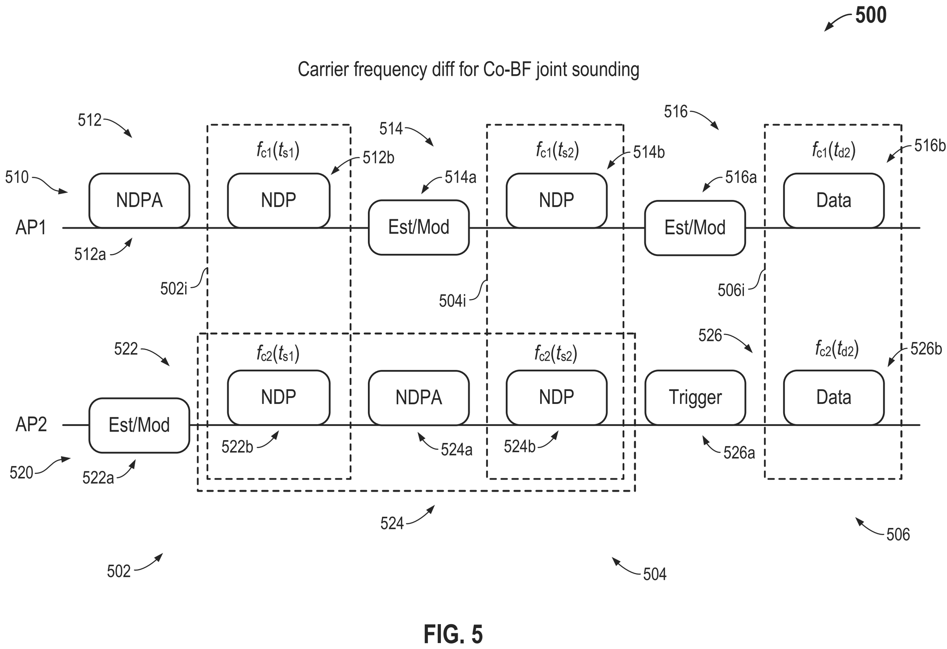

FIG. 5 depicts a sequence diagram 500 for frequency planning in beamforming according to an embodiment.

Referring to FIG. 5, the sequence diagram 500 may include transmission sequencies between AP1 and AP2. AP1 and AP2 may be indicated respectively by AP1 and AP2 sequences 510, 520 of time-domain transmission and/or processing sequences along corresponding lines. A transmission from AP1 and AP2 is indicated by a block in the AP1 sequence 510 adjacent the corresponding line and a transmission from AP2 to AP1 may be indicated by a block in the AP2 sequence 520 adjacent the corresponding line. Blocks in the AP1 or AP2 sequences 510, 520 that lie on the lines may be processing blocks indicating that AP1 or AP2 are performing processing, which may be result of a sequentially simultaneous transmission from the other of AP1 or AP2.

The sequence diagram 500 may include a first sounding sequence 502, a second sounding sequence 504, and a data sequence 506. The AP1 sequence 510 may be comprised of an AP1 first sounding sequence 512, an AP1 second sounding sequence 514, and an AP1 data sequence 516. The AP2 sequence 520 may include an AP2 first sounding sequence 522, an AP2 second sounding sequence 524, and an AP2 data sequence 526.

The first sounding sequence 502 may include the AP1 first sounding sequence 512 and the AP2 first sounding sequence 522. The second sounding sequence 504 may include the AP1 second sounding sequence 514 and the AP2 second sounding sequence 524. The data sequence 506 may include the AP1 data sequence 516 and the AP2 data sequence 526.

The AP1 first sounding sequence 512 can include an AP1 first sounding sequence NDPA 512a and a subsequent AP1 first sounding sequence NDP 512b. The AP2 first sounding sequence 522 can include an AP2 first sounding sequence Est/Mod block 522a and an AP2 first sounding sequence NDP 522b.

The AP1 second sounding sequence 514 may include an AP1 second sounding sequence Est/Mod block 514a and an AP1 second sounding sequence NDP 514b. The AP2 second sounding sequence 524 may include an AP2 second sounding sequence NDPA 524a and an AP2 second sounding sequence NDP 524b.

The AP1 data sequence 516 may include an AP1 data sequence Est/Mod block 516a and an AP1 data sequence data transmission 516b. The AP2 data sequence 526 may include an AP2 data sequence trigger 526a and an AP2 data sequence data transmission 526b.

The first sounding sequence 502 can include a first sounding sequence potential ICI transmissions 502i. The first sounding sequence potential ICI transmissions 502i may include the AP1 first sounding sequence NDP 512b and the AP2 first sounding sequence NDP 522b.

The second sounding sequence 504 can include a second sounding sequence potential ICI transmissions 504i. The second sounding sequence potential ICI transmissions 504i may include the AP1 and AP2 second sounding sequence NDPs 514b, 524b.

The data sequence 506 can include a data sequence potential ICI transmissions 506i. The data sequence potential ICI transmissions 506i can include the AP1 and AP2 data sequence data transmissions 516b, 526b.

Referring to the first sounding sequence 502, AP1 may transmit the AP1 first sounding sequence NDPA 512a at an AP1 carrier frequency *f*_{*c*1}. AP2 may receive the AP1 first sounding sequence NDPA 512a. AP2 may estimate the AP1 carrier frequency *f*_{*c*1} based on the AP1 first sounding sequence NDPA 512a at the AP2 first sounding sequence Est/Mod block 522a. AP2 can also modify the AP2 carrier frequency *f*_{*c*2} to match the estimated AP1 carrier frequency *f*_{*c*1} at the AP2 first sounding sequence Est/Mod block 522a.

AP1 may transmit the AP1 first sounding sequence NDP 512b. At about the same time, AP2 may transmit the AP2 first sounding sequence NDP 522b. The AP1 first sounding sequence NDP 512b and the AP2 first sounding sequence NDP 522b may experience ICI. However, due to the modified AP2 carrier frequency *f*_{*c*2} matching the estimated AP1 carrier frequency *f*_{*c*1}, the first sounding sequence potential ICI transmissions 502i may not experience ICI.

Referring to the second sounding sequence 504, AP2 may transmit the AP2 second sounding sequence NDPA 524a. AP1 may receive the AP2 second sounding sequence NDPA 524a. AP1 may estimate the AP2 carrier frequency *f*_{*c*2} based on the received AP2 second sounding sequence NDPA 524a. AP1 may also modify the AP1 carrier frequency *f*_{*c*1} to match the estimated AP2 carrier frequency *t*_{c2}.

AP1 can transmit the AP1 second sounding sequence NDP 514b. At about the same time, AP2 can transmit the AP2 second sounding sequence NDP 524b. The AP1 second sounding sequence NDP 514b and the AP2 second sounding sequence NDP 524b may potentially experience ICI. However, because the modified AP1 carrier frequency *f*_{*c*1} may match the AP2 carrier frequency *f*_{*c*2}, the second sounding sequence potential ICI 504i may not include ICI.

Referring to the data sequence 506, AP2 can transmit the AP2 data sequence trigger 526a. AP1 can receive the AP2 data sequence trigger 526a. AP1 can estimate the AP2 carrier frequency *f*_{*c*2} based on the received AP2 data sequence trigger 526a at the AP1 data sequence Est/Mod block 516a. AP1 can also modify the AP1 carrier frequency *f*_{*c*1} to match the estimated AP2 carrier frequency *t*_{c2}.

AP1 can transmit the AP1 data sequence data transmission 516b using the modified AP1 carrier frequency *f*_{*c*1}. At about the same time, AP2 can transmit the AP2 data sequence data transmission 526b using the AP2 carrier frequency *f_{c2}.* The AP1 data sequence data transmission 516ba and the AP2 data sequence data transmission 526b may therefore experience ICI. However, because the modified AP1 carrier frequency *f*_{*c*1} can match the estimated AP2 carrier frequency *f*_{*c*2}, the data sequence potential ICI transmissions 506i may not include ICI.

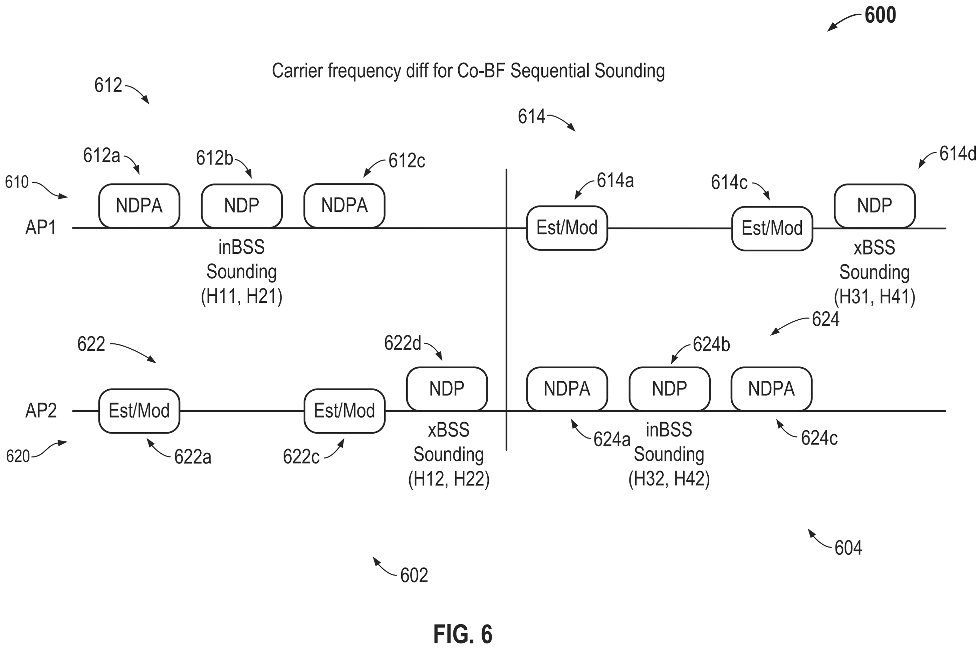

FIG. 6 depicts a sequence diagram 600 for frequency planning for beamforming according to an embodiment. As shown in FIG. 6, carrier frequency synchronization occurs using sequential sounding. That is, the sounding processes do not include joint transmissions. However, the sequence diagram 600 may be followed by data transmissions that include Co-BF transmissions by AP1 and AP2.

Referring to FIG. 6, the sequence diagram 600 may include transmission sequencies between AP1 and AP2. AP1 and AP2 may be indicated respectively by AP1 and AP2 sequences 610, 620 of time-domain transmission and/or processing sequences along corresponding lines. A transmission from AP1 and AP2 is indicated by a block in the AP1 sequence 610 adjacent the corresponding line and a transmission from AP2 to AP1 may be indicated by a block in the AP2 sequence 620 adjacent the corresponding line. Blocks in the AP1 or AP2 sequences 610, 620 that lie on the lines may be processing blocks indicating that AP1 or AP2 are performing processing, which may be result of a sequentially simultaneous transmission from the other of AP1 or AP2.

The sequence diagram 600 may include a first sounding sequence 602 and a second sounding sequence 604. The AP1 sequence 610 can include an AP1 first sounding sequence 612 and an AP1 second sounding sequence 614. The AP2 sequence 620 can include an AP2 first sounding sequence 622 and an AP2 second sounding sequence 624.

The first sounding sequence 602 may include the AP1 first sounding sequence 612 and the AP2 first sounding sequence 622. The second sounding sequence 604 may include the AP1 second sounding sequence 614 and the AP2 second sounding sequence 624.

The AP1 first sounding sequence 612 may include an AP1 first sounding sequence first NDPA 612a, an AP1 first sounding sequence NDP 612b, and an AP1 first sounding sequence second NDPA 612c. The AP2 first sounding sequence 622 may include an AP2 first sounding sequence first Est/Mod block 622a, an AP2 sounding sequence second Est/Mod block 622c, and an AP2 first sounding sequence NDP 622d.

The AP1 second sounding sequence 614 may include an AP1 second sounding sequence first Est/Mod block 614a, an AP1 second sounding sequence second Est/Mod block 614c, and an AP1 second sounding sequence NDP 614d. The AP2 second sounding sequence 624 may include an AP2 second sounding sequence first NDPA 624a, an AP2 second sounding sequence NDP 624b, and an AP2 second sounding sequence second NDPA 624c.

Referring to the first sounding sequence 602, AP1 may transmit the AP1 first sounding sequence first NDPA 612a. AP2 may receive the transmitted AP1 first sounding sequence first NDPA 612a. AP2 may estimate the AP1 carrier frequency *f*_{*c*1} based on the received AP1 first sounding sequence first NDPA 612a. AP2 may also modify the AP2 carrier frequency *f*_{*c*2} based on the estimated AP1 carrier frequency *f*_{*c*1}. The AP1 first sounding sequence NDP 612b may also be transmitted to an AP1 STA for in-BSS sounding.

AP1 may also transmit the AP1 first sounding sequence second NDPA 612c. The AP1 first sounding sequence second NDPA 612c may be received by AP2. AP2 may estimate the AP1 carrier frequency *f*_{*c*1} based on the AP1 first sounding sequence second NDPA 612c at the AP2 first sounding sequence second Est/Mod block 622c. AP2 may modify the AP2 carrier frequency *f*_{*c*2} to match the estimated AP1 carrier frequency *f*_{*c*1} at the AP2 first sounding sequence second Est/Mod block 622c. AP2 may subsequently transmit the AP2 first sounding sequence NDP 622d using the modified AP2 carrier frequency *f*_{*c*2} as a cross-BSS sounding result.

Referring to the second sounding sequence 604, AP2 may transmit the AP2 second sounding sequence first NDPA 624a. AP1 may receive the transmitted AP2 second sounding sequence first NDPA 624a. AP1 may estimate the AP1 carrier frequency *f*_{*c*1} based on the received AP2 second sounding sequence first NDPA 624a at the AP1 second sounding sequence first Est/Mod block 614a. AP2 may subsequently transmit the AP2 second sounding sequence NDP 624b. AP2 may transmit the AP2 second sounding sequence NDP 624b to an AP2 STA for in-BSS sounding.

AP2 may also transmit the AP2 second sounding sequence second NDPA 624c. AP1 may receive the AP2 second sounding sequence second NDPA 624c. AP1 may estimate the AP2 carrier frequency *f*_{*c*2} based on the received AP2 second sounding sequence second NDPA 624c at the AP1 second sounding sequence second Est/Mod block 614c. AP1 may also modify the AP1 carrier frequency *f*_{*c*1} to match the estimated AP2 carrier frequency *f*_{*c*2} at the AP1 second sounding sequence second Est/Mod block 614c. AP1 may subsequently transmit the AP1 second sounding sequence NDP 614d at the modified AP carrier frequency *f*_{*c*1} for cross-BSS sounding.

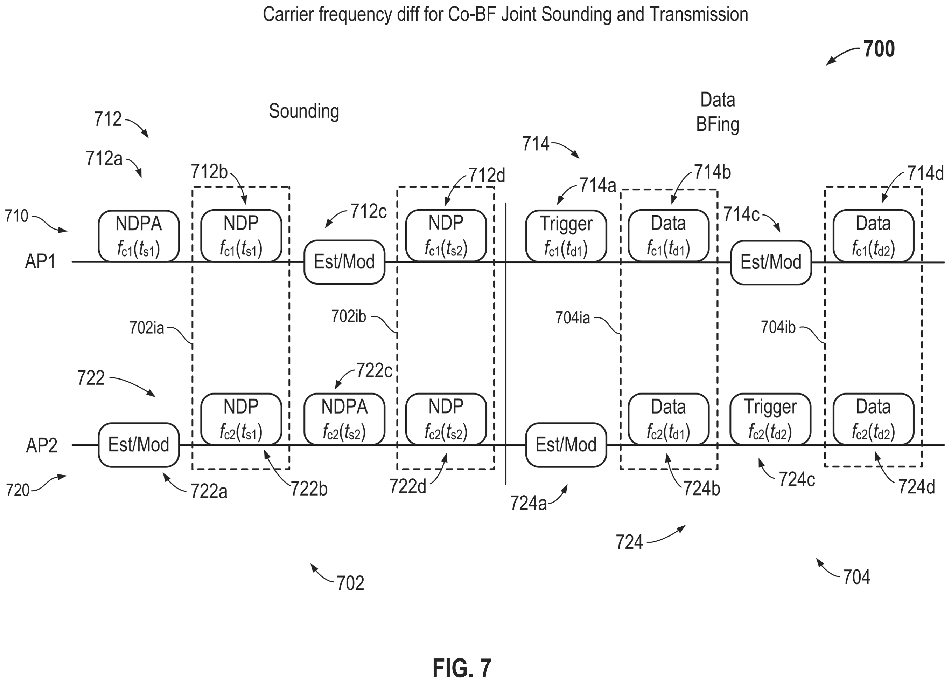

FIG. 7 depicts a sequence diagram 700 for frequency planning in beamforming according to an embodiment.

Referring to FIG. 7, the sequence diagram 700 may include transmission sequences between AP1 and AP2. AP1 and AP2 may be indicated respectively by AP1 and AP2 sequences 710, 720 of time-domain transmission and/or processing sequences along corresponding lines. A transmission from AP1 and AP2 is indicated by a block in the AP1 sequence 610 adjacent the corresponding line and a transmission from AP2 to AP1 may be indicated by a block in the AP2 sequence 720 adjacent the corresponding line. Blocks in the AP1 or AP2 sequences 710, 720 that lie on the lines may be processing blocks indicating that AP1 or AP2 are performing processing, which may be result of a sequentially simultaneous transmission from the other of AP1 or AP2.

The sequence diagram 700 may include a sounding sequence 702 and a data sequence 704. The AP1 sequence 710 can include an AP1 sounding sequence 712 and a AP1 data sequence 714. The AP2 sequence 720 can include an AP2 sounding sequence 722 and an AP2 data sequence 724.

The sounding sequence 702 can include the AP1 sounding sequence 712 and the AP2 sounding sequence 722. The data sequence 704 can include the AP1 data sequence 714 and the AP2 data sequence 724.

The AP1 sounding sequence 712 may include an AP1 sounding sequence NDPA 712a, an AP1 sounding sequence first NDP 712b, an AP1 sounding sequence Est/Mod block 712c, and an AP1 sounding sequence second NDP 712d.

The AP2 sounding sequence 722 may include an AP2 sounding sequence Est/Mod block 722a, an AP2 sounding sequence first NDP 722b, an AP2 sounding sequence NDPA 722c, and an AP2 sounding sequence second NDP 722d.

The AP1 data sequence 714 may include an AP1 data sequence trigger 714a, an AP1 data sequence first data transmission 714b, an AP1 data sequence Est/Mod block 714c, and an AP1 data sequence second data transmission 714d.

The AP2 data sequence 724 may include an AP2 data sequence Est/Mod block 724a, an AP2 data sequence first data transmission 724b, an AP2 data sequence trigger 724c, and an AP2 data sequence second data transmission 724d.

The sounding sequence 702 can include a sounding sequence first potential ICI transmissions 702ia and a sounding sequence second potential ICI transmissions 702ib. The sounding sequence first potential ICI transmissions 702ia may include the AP1 sounding sequence first NDP 712b and the AP2 sounding sequence first NDP 722b. The sounding sequence second potential ICI transmissions 702ib can include the AP1 sounding sequence second NDP 712d and the AP2 sounding sequence second NDP 722d.

The data sequence 704 can include a data sequence first potential ICI transmissions 704ia and a data sequence second potential ICI transmissions 704ib. The data sequence first potential ICI transmissions 704ia may include the AP1 data sequence first data transmission 714b and the AP2 data sequence first data transmission 724b. The data sequence second potential ICI transmissions 704ib may include the AP1 data sequence second data transmission 714d and the AP2 data sequence second data transmission 724d.

Referring to the sounding sequence 702, AP1 may transmit the AP1 sounding sequence NDPA 712a may be transmitted by AP1. AP2 may receive the AP1 sounding sequence NDPA 712a. AP2 may estimate the AP1 carrier frequency *f*_{*c*1} from the AP1 sounding sequence NDPA 712 at the AP2 sounding sequence Est/Mod block 722a. AP2 can also modify the AP2 carrier frequency *f*_{*c*2} to match the AP1 carrier frequency *f*_{*c*1} at he AP2 sounding sequence Est/Mod block 722a.

AP2 may transmit the AP2 sounding sequence first NDP 722b using the modified AP2 carrier frequency *f*_{*c*2}. At about the same time, AP1 may transmit the AP1 sounding sequence first NDP 712b using the AP1 carrier frequency *f*_{*c*1}.

The AP1 sounding sequence first NDP 712b and the AP2 sounding sequence first NDP 722b can potentially experience ICI. However, because the modified AP2 carrier frequency *f*_{*c*2} may match the AP1 carrier frequency *f*_{*c*1}, ICI may not be present during the sounding sequence first potential ICI transmissions 702ia.

AP2 may transmit the AP2 sounding sequence NDPA 722c. AP1 may receive the AP2 sounding sequence NDPA 722c. AP1 can estimate the AP2 carrier frequency *f*_{*c*2} based on the AP2 sounding sequence NDPA 722a at the AP1 sounding sequence Est/Mod block 712c. AP1 may also modify the AP1 carrier frequency *f*_{*c*1} to match the AP2 carrier frequency *f*_{*c*2} at the AP1 sounding sequence Est/Mod block 712c.

AP1 may transmit the AP1 sounding sequence second NDP 712d using the modified AP1 carrier frequency *f*_{*c*1}. At about the same time, AP2 may transmit the AP2 sounding sequence second NDP 722d using the AP2 carrier frequency *t*_{*c*2}.

The AP1 sounding sequence second NDP 712d and the AP2 sounding sequence second NDP 722d can potentially experience ICI. However, because the modified AP1 carrier frequency *f*_{*c*1} may match the AP2 carrier frequency *f*_{*c*2}, ICI may not be present during the sounding sequence second potential ICI transmissions 702ib.

Referring to the data sequence 704, AP1 may also transmit the AP1 data sequence trigger 714a. AP2 may receive the AP1 data sequence trigger 714a. AP2 can estimate the AP1 carrier frequency *f*_{*c*1} based on the AP1 data sequence trigger 714a at the AP2 data sequence Est/Mod block 724a. AP2 may also modify the AP2 carrier frequency *f*_{*c*2} based on the estimated AP1 carrier frequency *f*_{*c*1} at the AP2 data sequence Est/Mod block 724a.

AP2 can transmit the AP2 data sequence first data transmission 724b using the modified AP2 carrier frequency *f*_{*c*2}. At about the same time, AP1 can transmit the AP1 data sequence first data transmission 714b using the AP1 carrier frequency *f*_{*c*1}.

The AP1 data sequence first data transmission 714b and the AP2 data sequence first data transmission 724b can potentially experience ICI. However, because the modified AP2 carrier frequency *f*_{*c*2} may match the AP1 carrier frequency *f*_{*c*1}, ICI may not be present during the data sequence first potential ICI transmissions 704ia.

AP2 may also transmit the AP2 data sequence trigger 724c. AP1 may receive the AP2 data sequence trigger 724c. AP1 can estimate the AP2 carrier frequency *f*_{*c*2} based on the received AP2 data sequence trigger 724c at the AP1 data sequence Est/Mod block 714c. AP1 can also modify the AP1 carrier frequency *f*_{*c*1} based on the estimated AP2 carrier frequency *f*_{*c*2} at the AP1 data sequence Est/Mod block 714c.

AP1 can transmit AP1 data sequence second data transmission 714d using the estimated AP1 carrier frequency *f*_{*c*1}. At about the same time, AP2 can transmit the AP2 data sequence second data transmission 724d using the AP2 carrier frequency *t*_{*c*2}.

The AP1 data sequence second data transmission 714d and the AP2 data sequence second data transmission 724d could potentially experience ICI. However, because the modified AP1 carrier frequency *f*_{*c*1} may match the AP2 carrier frequency *f*_{*c*2}, the data sequence second potential ICI transmissions 704ib may not experience ICI.

The foregoing sequence diagrams 400, 500, 600, and 700 may include frequency reference frames and frequency alignment frames. A frequency reference frame may be a transmission from an AP that is used by another AP for frequency alignment. For example, with reference to FIG. 4, the AP1 sounding sequence NDPA 412a may be a frequency reference frame and the AP2 sounding sequence NDP 422b may be a frequency alignment frame. Similarly, the AP1 first data sequence trigger 414a may be a frequency reference frame and the AP2 first data sequence transmission 424b. The following table may summarize the frequency reference frames and frequency alignment frames shown in FIGS. 4 through 7.

| **Frequency reference frame** | **Frequency alignment frame** |
|---|---|
| NDPA 412a | NDP 422b |
| Trigger 414a | Data 424b |
| Trigger 426a | Data 416b |
| | |
| NDPA 512a | NDP 522b |
| NDPA 524a | NDP 514b |
| Trigger 526a | Data 516b |
| | |
| NDPA 612a | |
| NDPA 612c | NDP 622d |
| NDPA 624a | |
| NDPA 624c | NDP 614d |
| | |
| NDPA 712a | NDP 722b |
| NDPA 722c | NDP 712d |
| Trigger 714a | Data 724b |
| Trigger 724c | Data 714d |

A blank frequency alignment frame cell may indicate that an intra-BSS transmission followed the frequency reference frame. However, the other AP may still perform frequency synchronization even if the other AP does not subsequent transmit a frequency alignment frame.

With reference to FIG. 2, the frequency synchronization between AP1 and AP2 can be used to ensure that ICI may not occur during Co-BF transmissions, such as those shown in FIGS. 4, 5, and 7. It should also be appreciated that the frequency synchronization may be part of a process that involves sounding result reuse, as is explained in the following in more detail.

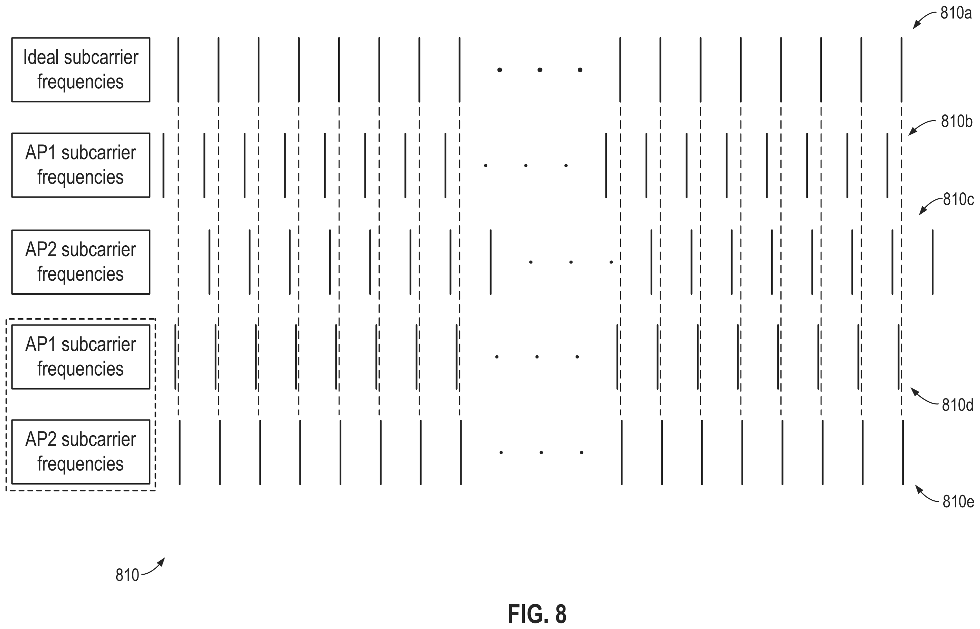

FIG. 8 depicts a carrier frequency diagram 800 for frequency planning and sounding result reuse in beamforming according to an embodiment.

Referring to FIG. 8, the carrier frequency diagram 800 includes a plurality of subcarrier frequencies 810. The plurality of subcarrier frequencies 810 are depicted as vertical lines that may correspond to the center frequencies 220 of the plurality of subcarriers 210 described with reference to FIG. 2. The plurality of subcarrier frequencies 810 are comprised of ideal subcarrier frequencies 810a, AP1 precorrection AP1 subcarrier frequencies 810b, precorrection AP2 subcarrier frequencies 810c, corrected AP1 subcarrier frequencies 810d, and corrected AP2 subcarrier frequencies 810e. The ideal subcarrier frequencies 810a are extended as dashed lines through the carrier frequency diagram 800. Accordingly, a distance or spanging of a given subcarrier frequency in the plurality of subcarrier frequencies 810 may indicate a potential ICI between AP1 subcarrier and AP2 subcarrier frequencies.

The corrected AP1 subcarrier frequencies 810d and the corrected AP2 subcarrier frequencies 810e are proximate to each other in the frequency domain. That is, the frequencies of the corrected AP1 subcarrier frequencies 810d may have a frequency that is proximate a corresponding corrected AP2 subcarrier frequencies 810e. Accordingly, the orthogonality principle may be maintained. As a result, although ICI may potentially be present due to spacing of the precorrection AP1 subcarrier frequencies 810b and the precorrection AP2 subcarrier frequencies 810c prior to sounding, the sounding results can be shared between AP1 and AP2 to synchronize the frequencies between AP1 and AP2.

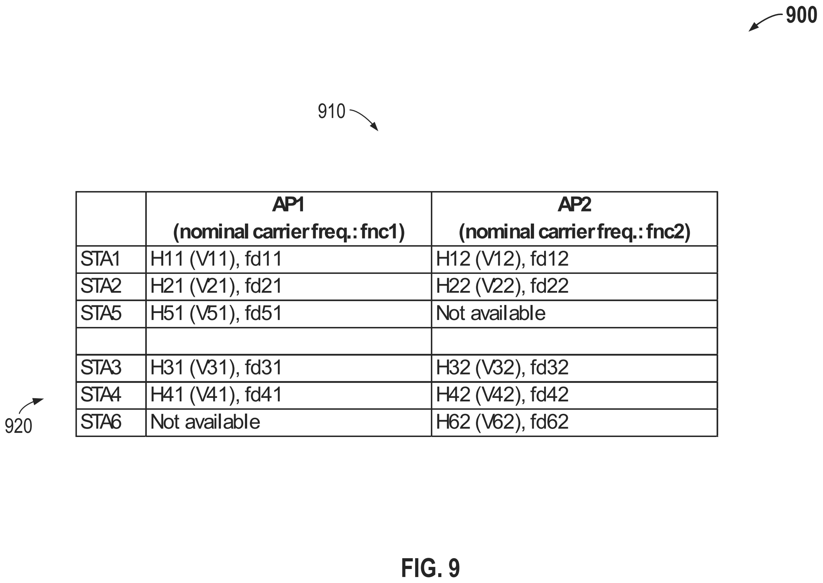

FIG. 9 shows a table 900 of values obtained based on soundings for a system including two APs and six STAs, such as the system 100 shown in FIG. 1. With more particularity, the system reflected in the table 900 includes an AP1 associated with STA1, STA2, and STA5 and an AP2 associated with STA3, STA4, and STA6. Also reflected in the table 900 are in-BSS and cross-BSS values, and non-values where a STA is not part of a cross-BSS sounding or, more particularly with reference to the example of FIG. 9, STA5 and STA6.

Referring to FIG. 9, the table 900 includes AP columns 910 respectively comprising values for AP1 and AP2. The table 900 also includes rows 920 of STAs that measure the training signals and provide the corresponding CSI report. As shown, the STA rows 920 are labeled STA1, STA2, STA5 and STA3, STA4, STA6 to indicate the STA that measured the training signals. Each of the STA rows 920 can have the values corresponding to each of the APs of the AP columns 910 and STAs of the STA rows 920.

For example, the STA1 row includes the values obtained based on training signals sent by AP1, which are denoted as *"H11* (*V*11) *fd*11," which may be in-BSS values. The STA1 row also has values obtained based on training signals sent by a non-associated AP2, which is denoted as *"H12 (V12) fd*12," which are cross-BSS values. In the notation, the first numerical subscript may indicate the STA that received the training signals, which for STA1 is "1", STA2 is "2", etc. The second numerical subscript may indicate the transmitting AP, which for AP1 is "1" and AP2 is "2". It should be appreciated that variables with subscripts can be interchangeable with variables that do not include subscripts such as, for example, for a frequency difference variable *f_{d}* being equivalent to *fd,* etc.

The letters may represent a matrix, vector, and/or scalar of values obtained from the sounding. As shown in FIG. 9, the matrices include a channel matrix *H* and a CSI feedback matrix V. Also shown is a frequency difference *fd.* Sounding results may include CSI feedback matrix V and potentially a singular value matrix *S* and signal to noise ratio (SNR) per spatial stream. Additionally, or alternatively, the sounding results may include other matrices, vector, and/or scalar values. The CSI feedback matrix *V* and the singular value matrix *S* can be obtained through decomposition of the channel matrix *H.* An exemplary decomposition may be singular value decomposition (SVD) although any suitable decomposition may be employed, such as orthogonal-right upper triangular matrix (QR) decomposition, etc.

The channel matrix *H* may be a matrix of complex values representing measurements of training signals sent by an AP's antenna array to a STA antenna array. The channel matrix columns may correspond to spatial streams and the channel matrix rows may correspond to the receive antennas Rx of the STA. The number of spatial streams *N_{SS}* transmitted during sounding may be different than the number of transmit antennas of an AP's antenna array. Accordingly, the channel matrix *H* can have dimensions of the number of receiver antennas *N_{RX}* and the number of spatial streams *N_{SS}.* It should be appreciated that this is an exemplary configuration of the channel matrix *H* for the sake of discussion. For example, other channel matrices may have channel matrix rows that correspond to the spatial streams transmitted during sounding and channel matrix columns that correspond to receive antennas *Rx.*

The sounding results may be associated with a specific subcarrier, such as a subcarrier of the plurality of subcarriers 210 described with reference to FIG. 2. Accordingly, a sounding result comprising matrix, vector, or the like, for a given subcarrier can be denoted with the subcarrier index *k* described with reference to FIG. 2. Accordingly, the table 900 may be described as including values related to a subcarrier *k,* including a channel matrix *H*(*k*) and a CSI feedback matrix *V(k).*

A precoding matrix *P(k)* (not shown in FIG. 9) can be based on the CSI feedback matrix *V(k).* The precoding matrix *P(k)* can be used for beamforming, as will be described in more detail in the below. However, for the sake of discussion per transmit antenna *Tx* weights w(k) can be determined based on the precoding matrix *P(k)* for beamforming.

The frequency difference *f_{d}* (shown as *fd* in FIG. 9) or may be a difference between the measured carrier frequency *f_{c}* of the training signals and a nominal carrier frequency *f_{nc}*. For example, a given channel may have specified or typical value (e.g., a "center frequency" in a standard defining a channel) for sounding at 5.000 000 000 GHz, but an AP transmits a training signal at 5.000 000 150 GHz due to, for example, prior frequency corrections, planning, or the like.

A frequency difference *f_{d}* can be computed from an NDPA transmitted from one AP to another AP. For example, AP2 may receive an NDPA transmitted by AP1 and estimate AP1's sounding carrier frequency *f*_{*c*1}(*tₛ*) based on the carrier frequency of the NDPA transmitted by AP1. The AP2 can determine an AP1-AP2 carrier frequency offset *t_{d-offset}* = *f*_{*c*1}(*tₛ*) *- t*_{*c*2}(*tₛ*). AP2 can adjust its carrier frequency to a new AP2 carrier frequency ${f}_{c}^{new} = {f}_{c 2} \left({tt}_{s}\right) + {f}_{c - offset} = {f}_{c 1} \left({t}_{s}\right)$ to align with AP1. AP2 can transmit the NDP at the aligned AP2 carrier frequency ${f}_{c}^{New}$ to a non-associated STA, such as for example, STA1. STA1 can measure the channel and compute an STA1-AP2 CSI feedback matrix *V*₁₂(*k*), additionally, or alternatively, along with a SNR per spatial stream, and a singular value matrix S(k). STA1 can send the CSI feedback to AP2 in MU format, including the STA1-AP2 CSI feedback channel matrix *V*₁₂(*k*), the SNR per spatial stream, and the singular value matrix S(k).

AP2 can receive the CSI feedback from STA1 and may tag the received STA1-AP2 CSI feedback matrix *V*₁₂(*k*) with the STA1-AP2 frequency difference tag *fd*₁₂*,* which may be the frequency different offset *f_{d-offset}* used by AP2 to sound STA1 with the NDP as described above. AP2 can store the received STA1-AP2 CSI feedback channel matrix *V*₁₂(*k*) with the STA1-AP2 frequency difference tag *f*_{*d*12}. The STA1-AP2 frequency difference tag *f*_{*d*12} may accordingly indicate that the STA1-AP2 CSI feedback channel matrix *V*₁₂(*k*) was obtained using the aligned AP2 carrier frequency ${f}_{c 2}^{New} = {f}_{c 1} \left({t}_{s}\right)$.

When performing or using sounding results, such as the sounding results shown in FIG. 9, there may be several guidelines that may need to be observed. For example, a carrier frequency *f_{c}* used during beamforming by an AP (or equivalent subcarrier frequency adjustment via a CSI feedback matrix V) may need to be close to a carrier frequency *f_{c}* during the same AP's sounding transmissions. For simultaneous transmissions, such as during a joint sounding or a Co-BF procedure, the AP1 carrier frequency *f*_{*c*1} may need to be within 350 Hz of the AP2 carrier frequency *f*_{*c*2} to reduce or eliminate any ICI. Another guideline may be that each AP will observe the above and other frequency planning guidelines while also minimizing computations, such as interpolations of a set of CSI feedback matrices V.

As discussed above, a guideline might include a subcarrier frequency adjustment via interpolation to determine a new CSI feedback matrix *V^{New}*(*k*). The new CSI feedback matrix *V^{New}*(*k*) for the subcarrier index *k* may be determined by using multiple neighboring old CSI feedback matrices *V^{Old}*(*k*) to derive a new CSI feedback matrix *V^{New}*(*k*). For example, if after being adjusted with a new carrier frequency precorrection value, a new subcarrier frequency *f_{sc}*(100) (where 100 is an arbitrary exemplary subcarrier index *k* value) lies between the subcarrier frequencies of old CSI feedback matrices *V^{Old}*(101) and *V^{Old}*(102), then a new CSI feedback matrix *V^{New}*(100) can be determined by interpolating between values of the old CSI feedback matrices *V^{Old}*(101) and *V^{Old}*(102).

It should be appreciated that a given algorithm may be specific to an implementation and that any suitable method can be used to adjust a given subcarrier frequency *f_{sc}* for a given subcarrier *k* based on the selected pre-corrected carrier frequency value. Accordingly, the adjustment may not depend on the subcarrier index *k* (or equivalently the subcarrier frequency at a given subcarrier index *k*) since each subcarrier has the same frequency difference *f_{d}.* That is, the frequency difference *f_{d}* may not be subcarrier specific and there may only be one frequency difference *f_{d}* for one set of feedback information from a STA sounded at one time.

Whether or not a frequency precorrection value is utilized can be based on a frequency difference tolerance *fₜ*. For example, when different sounding results obtained at different times and in different modes are used at one time for, for example, Co-BF transmission, then the sounding results may need to be aligned within a tolerable range. Whether or not the sounding results are within the tolerable range may be defined by a frequency difference tolerance *fₜ* which may be compared to the frequency differences *f_{d}* obtained by the various sounding results. Accordingly, a carrier frequency precorrection value may need to be chosen to minimize the realignment of the different sounding results.

In addition, once a carrier frequency *f_{c}* precorrection value is determined for realignment, then whether a set of the CSI feedback matrices *{V(k)}* may need to be realigned can also be determined. With reference to the exemplary system 100 of FIG. 1 and the table 900 of FIG. 9, the set of the CSI feedback matrices *{V(k)}* may be {*V*₁₁(*k*), *V*₂₁(*k*), *... , V*₁₂(*k*), *V*₂₂(*k*), ... , *V*₁₂(*k*), *V*₅₂(*k*)}. Other systems and sets of CSI feedback matrices may include additional and/or alternative CSI feedback matrices. Choosing or selecting a carrier frequency *f*_{*c*1} precorrection value for an AP1 participating in a data transmission sequence can be expressed as: ${f}_{c 1} \left({t}_{d}\right) ∈ \left[{f}_{nc 1}\left({t}_{d}\right)+{f}_{d 11}-{f}_{t},{f}_{nc 1}\left({t}_{d}\right)+{f}_{d 11}+{f}_{t}\right] ;$ where:
the brackets "[ ]" indicate a range from a minimum value to a maximum value inclusive of those values; *f*_{*nc*1}(*t_{d}*) is an AP1 nominal carrier frequency for a given data transmission *f*_{*nc*1}(*t_{d}*);
*f*_{*d*11} is an AP1 frequency difference that may be associated with a STA1; and
*fₜ* is a frequency difference tolerance.
As show in Equation [1], the minimum carrier frequency precorrection value is *f*_{*nc*1}(*t_{d}*) *+ f*_{*d*11} *- fₜ* and the maximum carrier frequency precorrection value is *f*_{*nc*1}(*t_{d}*) *+ f*_{*d*11} + *fₜ*. The example shown in Equation [1] may be for a SU-MIMO-BF case.

For a MU-MIMO-BF case, an AP1 may need to send data to STA1, STA2, and/or STA5 using MU-MIMO-BF. Prior to such a transmission, a STA1-AP1 CSI feedback matrix *V*₁₁, a STA2-AP1 CSI feedback matrix *V*₂₁, and a STA5-AP1 CSI feedback matrix *V*₅₁ may be computed using sounding sequences that may be the same as or similar to those described in the foregoing using an AP1 carrier frequency *f*_{*c*1} computed based on an AP1 nominal carrier frequency *f*_{*nc*1} and a corresponding one of an STA1-AP1 frequency difference *f*_{*d*11}*,* an STA2-AP1 frequency difference *f*_{*d*21}, and an STA5-AP1 frequency difference *f*_{*d*51} which may or may not be obtained at the same or different sounding times.

For example, the AP1 carrier frequency *f*_{*c*1} used for sounding STA1/2/5 can be computed according to the following Equation [2]: ${f}_{c 1} = {f}_{nc 1} + \left\{{f}_{d 11}, {f}_{d 21}, {f}_{d 51}\right\} .$ Subsequently the AP1 can choose an AP1 carrier frequency *f*_{*c*1} according to the following: ${f}_{c 1} \left({t}_{d}\right) = {f}_{nc} \left({t}_{d}\right) + {f}_{d 1} ;$ for a data transmission BFing at a data transmission time *t_{d},* Additionally, or alternatively, an AP1 frequency difference value *f*_{*d*1} can be chosen such that a number of new CSI feedback matrices ${V}_{11}^{New}$*,* ${V}_{21}^{New}$, and/or ${V}_{51}^{New}$ obtained by interpolation is minimized. If the prior CSI feedback matrices *V*₁₁, *V*₂₁, and/or *V*₅₁ are sufficiently close in sounding carrier frequency, then we can choose *f*_{*d*1} such that if we use carrier frequency *f*_{*c*1}(*t_{d}*) then they may not need to be interpolated. If needed, the prior CSI feedback matrices *V*₁₁, *V*₂₁, and/or *V*₅₁ may be aligned with the chosen AP1 carrier frequency *f*_{*c*1}(*t_{d}*) using interpolation.

Co-BFing, as described above with reference to FIGS. 2 and 8, may require frequency alignment between AP1 and AP2. The AP1 may have prior intra-BSS CSI feedback matrices *V*₁₁, *V*₂₁ and cross-BSS CSI feedback matrices *V*₃₁, *V*₄₁. The frequency alignment may be accomplished by aligning, if needed, prior intra-BSS CSI feedback matrices *V*₁₁, *V*₂₁. and cross-BSS CSI feedback matrices *V*₃₁, *V*₄₁ to a chosen AP1 carrier frequency *f*_{*c*1}(*t_{d}*) for a data transmission at a data transmission time *t_{d}.* The frequency alignment between the AP1 carrier frequency *f*_{*c*1}(*tₛ*) and the AP2 CSI feedback matrices *V*₁₂, *V*₂₂, *V*₃₂, *V*₄₂ can be performed using a frequency reference frame after the AP1 carrier frequency *f*_{*c*1}(*t_{d}*) is aligned with the AP1 CSI feedback matrices *V*₁₁, *V*₂₁, *V*₃₁, *V*₄₁, whether interpolation is needed or not.

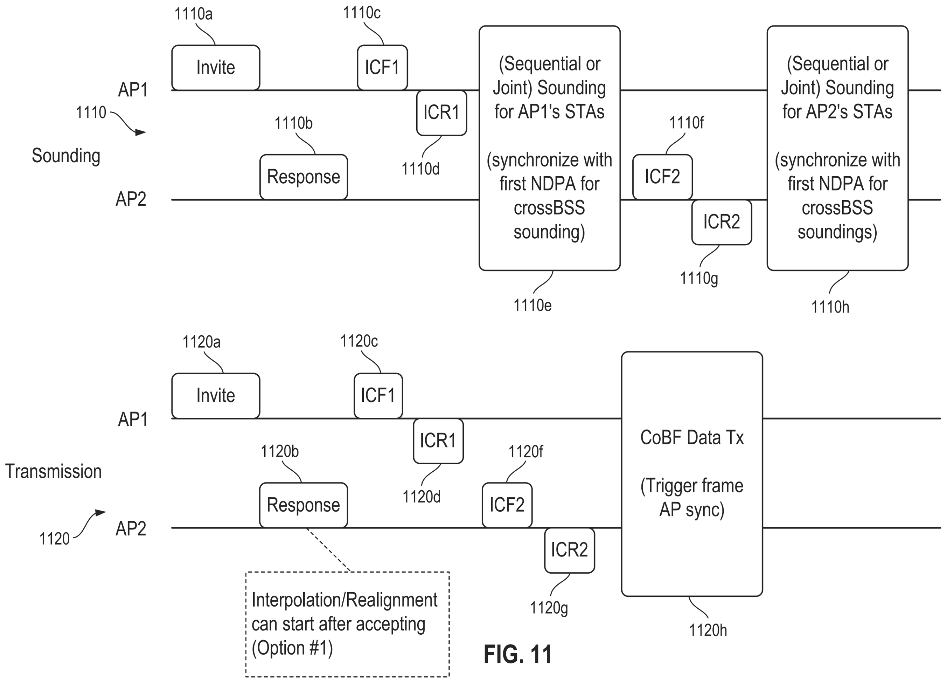

The frequency reference frame may be, for example, an invite frame, a trigger frame, etc. For example, if an invite frame is transmitted by the AP1, then the AP2 may detect or estimate the AP1 carrier frequency *f*_{*c*1}(*t_{d}*) from the invite frame. After the AP2 accepts the invitation, the AP2 may generate new AP2 CSI feedback matrices ${V}_{12}^{New} , {V}_{22}^{New} , {V}_{32}^{New}$, and ${V}_{42}^{New}$ that are aligned with the AP1 carrier frequency *f*_{*c*1}(*t_{d}*). This procedure may be part of an overall invite/response procedure described with reference to FIG. 11. Accordingly, the AP1 may transmit a trigger frame with the AP1 carrier frequency *f*_{*c*1}(*t_{d}*). The AP2 may detect and estimate the AP1 carrier frequency *f*_{*c*1}(*t_{d}*) to align the AP2 carrier frequency *f*_{*c*2}(*t_{d}*) to the AP1 carrier frequency *f*_{*c*1}(*t_{d}*). The AP1 and the AP2 may therefore perform Co-BFing at at STA using aligned carrier frequencies *f_{c}*(*t_{d}*) and aligned CSI feedback matrices *V(k).*

However, an invite frame may not be employed. For example, after aligning the AP1 carrier frequency *f*_{*c*1}(*t_{d}*) with the AP1 CSI feedback matrices *V*₁₁*, V*₂₁, *V*₃₁, *V*₄₁, the AP1 may transmit a trigger frame at the AP1 carrier frequency *f*_{*c*1}(*t_{d}*). The AP2 may receive the trigger frame and estimate or detect the AP1 carrier frequency *t*_{*c*1}(*t_{d}*) from the AP1 trigger frame. The AP2 may align the AP2 carrier frequency *t*_{*c*2}(*t_{d}*) and/or the AP2 CSI feedback matrices *V*₁₂, *V*₂₂, *V*₃₂, *V*₄₂, with the detected or estimated AP1 carrier frequency *f*_{*c*1}(*t_{d}*). For example, the AP2 may generate, with interpolation, new AP2 CSI feedback matrices ${V}_{12}^{New} , {V}_{22}^{New} , {V}_{32}^{New}$, and ${V}_{42}^{New}$ based on the estimated or detected AP1 carrier frequency *f*_{*c*1}(*t_{d}*).

It should be appreciated that performing interpolation on the AP2 CSI feedback matrices *V*₁₂, *V*₂₂, *V*₃₂, and/or *V*₄₂ may require some computation time. The computation time may need to be within a time constraint after the AP2 receives the frequency reference or other frame. If the time constraint is not sufficient then the trigger frame in the foregoing described invite frame may be employed. Additionally, or alternatively, transmitting a trigger frame may be preferable, with or without the packet extension, if the time available for computing the new AP2 CSI feedback matrices *V*₁₂, *V*₂₂, *V*₃₂, and/or *V*₁₂ is sufficient. It should also be appreciated that a carrier frequency *f_{c}* precorrection value can be chosen such that the number of realignments of the set of the CSI feedback matrices *{V(k)}* can be minimized, as the following explains.

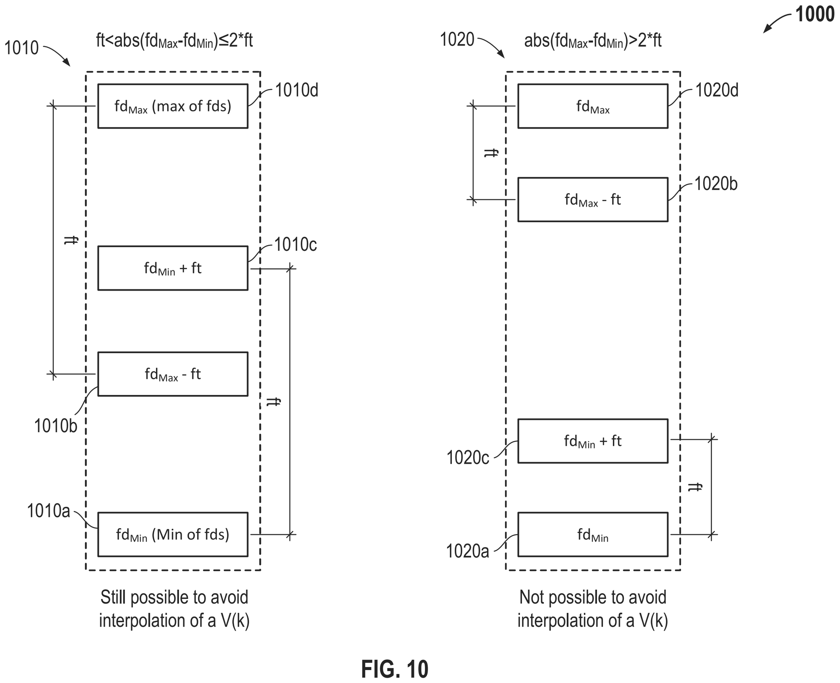

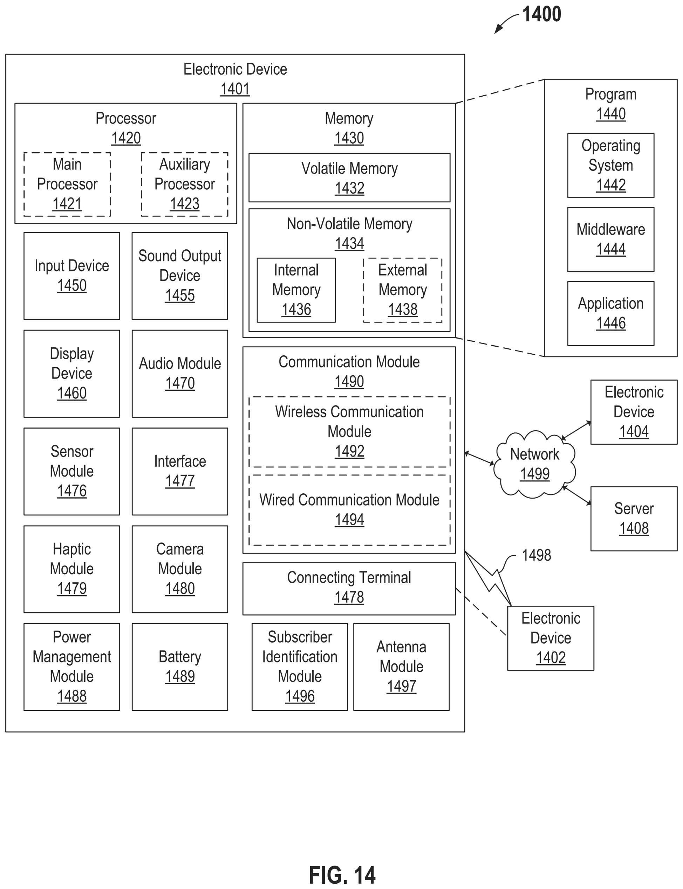

FIG. 10 shows a relative scale of a frequency difference tolerance comparison 1000. The frequency difference tolerance comparison is comprised of three different comparative relationships between an absolute value of difference between a maximum frequency difference maximum ${f}_{d}^{Max}$ and a frequency difference minimum ${f}_{d}^{Min}$ and a frequency difference tolerance *fₜ.* It may be desirable to avoid an interpolation on the set of CSI feedback matrices *{V(k)}* due to computational requirements for interpolation. The carrier frequency *f_{c}* may be chosen properly such that interpolation work is minimized or not needed. Also, digital interpolation can be replaced by adjusting a carrier frequency *f_{c}* at a phase lock loop (PLL), such as the RF carrier provided to the mixer 1400i shown in FIG. 14 described in more detail below.

Referring to FIG. 10, the frequency difference tolerance comparison 1000 may be comprised of a potential non-interpolation state 1010, and interpolation required condition 1020. The interpolation not required, potential non-interpolation, and interpolation required states 1010, 1020 may respectively include a frequency difference minimum ${f}_{d}^{Min}$ 1010a, 1020a, a frequency difference maximum-tolerance difference ${f}_{d}^{Max} - {f}_{t}$ 1010b, 1020b, a frequency difference minimum-tolerance sum ${f}_{d}^{Min} + {f}_{t}$ 1010c, 1020c, and a frequency difference maximum ${f}_{d}^{Max}$ 1010d, 1020d, although any suitable values for various conditions may be employed.

The potential non-interpolation state 1010 may represent a condition where it is still possible to avoid an interpolation of a CSI feedback matrix *V(k).* The condition is shown in FIG. 10 as being an absolution value of a difference between a frequency difference maximum ${f}_{d}^{Max}$ and a frequency difference minimum ${f}_{d}^{Min}$ that is greater than a frequency difference tolerance *fₜ* and less than or equal to double the frequency difference tolerance 2*fₜ* as shown in the below: ${f}_{t} < abs \left({f}_{d}^{Max}-{f}_{d}^{Min}\right) \leq 2 {f}_{t} .$ Accordingly, if a difference between the frequency difference maximum ${f}_{d}^{Max}$ and the frequency difference minimum ${f}_{d}^{Min}$ of the prior sounding results is within a two times the frequency difference tolerance *fₜ* range then the prior sounding results may possibly still be considered valid and can be reused.

The interpolation required condition 1020 may represent a condition where it may not be possible to avoid an interpolation of a CSI feedback matrix *V(k).* The condition is shown in FIG. 10 as being an absolution value of a difference between a frequency difference maximum ${f}_{d}^{Max}$ and a frequency difference minimum ${f}_{d}^{Min}$ that is greater than double the frequency difference tolerance *fₜ* as shown in the following Equation [5]: $abs \left({f}_{d}^{Max}-{f}_{d}^{Min}\right) > 2 {f}_{t} .$ Accordingly, if a difference between the frequency difference maximum ${f}_{d}^{Max}$ and the frequency difference minimum ${f}_{d}^{Min}$ of the prior sounding results is greater than double the frequency difference tolerance *fₜ* then at least some of the sounding results are likely not reusable.

In sum, as shown in FIG. 10, if the frequency difference tolerance comparison 1000 demonstrates, for example, that the frequency difference maximum ${f}_{d}^{Max}$ plus the frequency difference tolerance *fₜ* is less than the frequency difference minimum ${f}_{d}^{Min}$ plus the frequency difference tolerance *fₜ* then interpolation of a CSI feedback matrix *V(k)* in the set of the CSI feedback matrices *{V(k)}* may not be required. If this condition is not met, then a carrier frequency precorrection value may be selected to minimize the number of the CSI feedback matrices *V(k)* that need realignment.

FIG. 11 is an invite/response sequence diagram 1100 according to an embodiment.

Referring to FIG. 11, the invite sequence diagram 1100 has an invite sounding sequence 1110 and an invite transmission sequence 1120. The invite sounding sequence 1100a may include an invite 1110a transmitted by AP1 and a response 1110b transmitted by AP2. The invite sounding sequence 1110 can also include a first initial control frame (ICF) frame 1110c transmitted by AP1 to one or more intra-BSS STAs. The one or more intra-BSS STAs can respond with a first initial control response (ICR) 1110d. The invite sounding sequence 1100a can also include a sounding for AP1's STAs 1110e, which may be sequential or joint sounding. If cross-BSS sounding is employed in the sounding for AP1's STAs 1110e then a first NDPA may be employed for synchronization with other APs. The invite sounding sequence 1100a can also include a second ICF 1110f and a second ICR 1110g and a sounding for AP2's STAs 1110h.

Referring still to FIG. 11, the data transmission sequence 1120 can include an invite transmission 1120a transmitted by an AP and a response 1120b transmitted by AP2. The invite data transmission sequence 1120 can also include a first ICF 1120c transmitted by AP1 and a first ICF 1120d transmitted by AP1's intra-BSS STAs. The invite data transmission sequence 1120 can further include a second ICF 1120f transmitted by AP2 and a second ICR 1120g transmitted by AP2's STAs. Subsequently, a Co-BF data transmission 1120h may be formed by AP1 and AP2, as described in the foregoing.

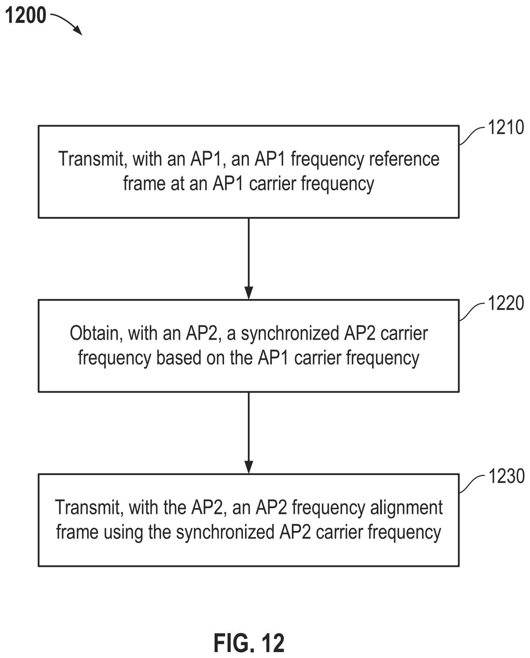

FIG. 12 is a method 1200 for carrier frequency synchronization according to an embodiment.

Referring to FIG. 12, the method 1200 can transmit, with an AP1, an AP1 frequency reference frame at an AP1 carrier frequency *f*_{*c*1} in step 1210. The method 1200 may also, in step 1220, obtain, with an AP2, a synchronized AP2 carrier frequency *f*_{*c*2} based on the AP1 carrier frequency *f*_{*c*1}. In step 1230, the method can transmit, with the AP2, an AP2 frequency alignment frame using the synchronized AP2 carrier frequency *f*_{*c*2}. It should be appreciated that the AP1 frequency reference frame may be one of an AP1 NDPA frame for a sounding sequence and a data transmission trigger frame for a data transmission sequence and the AP2 frequency alignment frame may comprise one of an AP2 NDP for the sounding sequence and an AP2 data transmission frame for the data transmission sequence, although any suitable frequency reference and frequency alignment frame(s) may be employed.

The method 1200 may further comprise transmitting, with the AP1, one of an AP1 NDP and an AP1 data transmission frame at the AP1 carrier frequency *f*_{*c*1} to a STA. The one of the AP1 NDP and the AP1 data transmission frame may be transmitted in a Co-BF transmission mode with the AP2 frequency alignment frame. The one of the AP1 NDP and the AP1 data transmission frame may be transmitted at zero power to verify that the AP2 frequency alignment frame may be transmitted with the synchronized AP2 carrier frequency *t*_{*c*2}.

Additionally, or alternatively, the method 1200 can further comprise obtaining, with the AP2, the synchronized AP2 carrier frequency *f*_{*c*2} based on the AP1 carrier frequency *f*_{*c*1} by receiving, with the AP2, the AP1 frequency reference frame transmitted by the AP1, estimating, with the AP2, the AP1 carrier frequency *f*_{*c*1} based on the received AP1 frequency reference frame, and modifying, with the AP2, the AP2 carrier frequency *f*_{*c*2} to match the AP1 carrier frequency *f*_{*c*1}. Receiving, with the AP2, the AP1 frequency reference frame transmitted by the AP1 may comprise receiving the AP1 frequency reference frame during one of a sounding sequence and a data transmission sequence of an AP1 associated STA in a BSS of the AP2.

Additionally, or alternatively, estimating, with the AP2, the AP1 carrier frequency *f*_{*c*1} may comprise determining, with the AP2, a frequency difference offset *fd_{offset}* between the AP1 carrier frequency *f*_{*c*1} and the AP2 carrier frequency *f*_{*c*2}. The method 1200 may further comprise storing, with the AP2, the frequency difference offset *fd_{offset}* as a frequency delta tag *f_{d}*.

The method can further comprise transmitting, with the AP2, an AP2 frequency reference frame to the AP1 at the synchronized AP2 carrier frequency *f*_{*c*2} and determining, with the AP1, a synchronized AP1 carrier frequency *f*_{*c*1} based on the synchronized AP2 carrier frequency *f*_{*c*2}. For example, the method 1200 can further comprise transmitting, with the AP1, an AP1 frequency alignment frame at the synchronized AP1 carrier frequency *f*_{*c*1} and transmitting, with the AP2, another AP2 frequency alignment frame at the synchronized AP2 carrier frequency *t*_{*c*2}.

The AP1 frequency reference frame may include an explicit request that the AP2 synchronize the AP2 carrier frequency *f*_{*c*2} to the AP1 carrier frequency *f*_{*c*1}. Additionally, or alternatively, the AP2 can determine the AP1 carrier frequency *f*_{*c*1} from a physical carrier signal of the AP1 frequency reference frame transmitted by the AP1. The method 1200 may further comprise at least one of transmitting a data transmission frame from the AP1 to a STA with the AP1 carrier frequency *f*_{*c*1} or transmitting the data transmission frame from the AP2 to the STA using the synchronized AP2 carrier frequency *f*_{*c*2}. The AP2 may obtain the synchronized AP2 carrier frequency *f*_{*c*2} based on the AP1 carrier frequency *f*_{*c*1} by modifying the AP2 carrier frequency to substantially match the AP1 carrier frequency *f*_{*c*1} so as to minimize ICI during a Co-BF transmission by the AP1 and the AP2 to a STA.

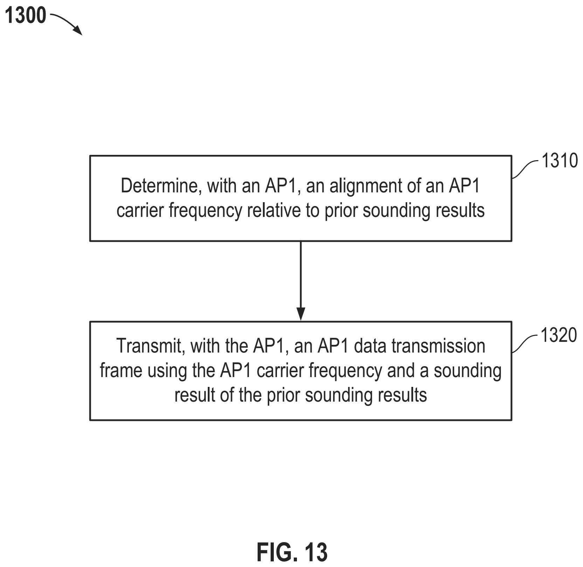

FIG. 13 is a method 1300 for sounding result reuse according to an embodiment.

The method 1300 may determine, with an AP1, an alignment of an AP1 carrier frequency *f*_{*c*1} relative to prior sounding results in step 1310. The method 1300 can also transmit, with the AP1, an AP1 data transmission frame using the AP1 carrier frequency *f*_{*c*1} and a sounding result of the prior sounding results in step 1320. The prior sounding results may be AP1 intra-BSS sounding results. Additionally, or alternatively, determining the alignment of the AP1 carrier frequency *f*_{*c*1} relative to prior sounding results may comprise selecting an AP1 carrier frequency *f*_{*c*1} value from a range defined at least by an AP1 nominal carrier frequency *f*_{*nc*1} and an AP1 frequency delta tag *f*_{*d*1} corresponding to an AP1 intra-BSS STA. The range may be defined by the AP1 nominal carrier frequency *f*_{*nc*1} and an AP1 frequency delta tag *f*_{*d*1} corresponding to an AP1 intra-BSS STA is further defined by a frequency delta tolerance *fₜ.* The AP1 frequency delta tag *t*_{*d*1} may comprise an intra-BSS STA frequency delta tag.

Additionally, or alternatively, determining, with the AP1, the alignment of the AP1 carrier frequency *f*_{*c*1} relative to the prior sounding results may comprise comparing, with the AP1, the AP1 carrier frequency *f*_{*c*1} to at least one of the prior sounding results. Determining, with the AP1, the alignment of the AP1 carrier frequency *f*_{*c*1} relative to prior sounding results can comprise comparing at least one frequency delta tag *f_{d}* of the sounding results to a frequency delta tolerance *ft.* The comparison of the at least one frequency delta tag *f_{d}* of the sounding results to a frequency delta tolerance *fₜ* can comprise comparing a difference between the maximum value of the at least one frequency delta tag *f_{d}* of the sounding results and a frequency delta tolerance *fₜ* and a difference between the minimum value of the at least one frequency delta tag *t_{d}* of the sounding results and the frequency delta tolerance *fₜ*.

Determining, with the AP1, the alignment of the AP1 carrier frequency *f*_{*c*1} relative to prior sounding results may comprise determining, with the AP1, an AP1 carrier frequency *f*_{*c*1} value that minimizes realignments of the prior sounding results. Realignment of the prior sounding results can comprise an interpolation of a CSI feedback matrix *V*(*k*) associated with an AP1 intra-BSS STA to the determined AP1 carrier frequency *f*_{*c*1} value.

The method 1300 can further comprise transmitting, with the AP1, an AP1 frequency reference frame for a transmission sequence at an AP1 carrier frequency *f*_{*c*1} and determining, with an AP2, an alignment of AP2 sounding results relative to the AP1 carrier frequency *f*_{*c*1}. The AP1 frequency reference frame for the transmission sequence can include a packet extension configured to provide sufficient time for the AP2 to determine an alignment of the AP2 sounding results relative to the AP1 carrier frequency *f*_{*c*1}. Determining, with the AP2, the alignment of the AP2 sounding results with the AP1 carrier frequency *f*_{*c*1} can further comprise synchronizing the AP2 carrier frequency *f*_{*c*2} to the AP1 carrier frequency *f*_{*c*1}.

The synchronization of the AP2 carrier frequency *f*_{*c*2} to the AP1 carrier frequency *f*_{*c*1} may be made at one of a PLL or a digital domain of the AP2. The sounding results may be obtained using a beamforming mode comprising at least one of a SU-MIMO mode, MU-MIMO mode, and coordinated beamforming Co-BF mode. The sounding results can comprise at least one of a CSI feedback matrix *V(k),* frequency delta tag *f_{d}*, and a transmission time tag.

FIG. 14 is a block diagram of an electronic device in a network environment 1400, according to an embodiment.

Referring to FIG. 14, an electronic device 1401 in a network environment 1400 may communicate with an electronic device 1402 via a first network 1498 (e.g., a short-range wireless communication network), or an electronic device 1404 or a server 1408 via a second network 1499 (e.g., a long-range wireless communication network). The electronic device 1401 may communicate with the electronic device 1404 via the server 1408. The electronic device 1401 may include a processor 1420, a memory 1430, an input device 1450, a sound output device 1455, a display device 1460, an audio module 1470, a sensor module 1476, an interface 1477, a haptic module 1479, a camera module 1480, a power management module 1488, a battery 1489, a communication module 1490, a subscriber identification module (SIM) card 1496, or an antenna module 1497. In one embodiment, at least one (e.g., the display device 1460 or the camera module 1480) of the components may be omitted from the electronic device 1401, or one or more other components may be added to the electronic device 1401. Some of the components may be implemented as a single integrated circuit (IC). For example, the sensor module 1476 (e.g., a fingerprint sensor, an iris sensor, or an illuminance sensor) may be embedded in the display device 1460 (e.g., a display).

The processor 1420 may execute software (e.g., a program 1440) to control at least one other component (e.g., a hardware or a software component) of the electronic device 1401 coupled with the processor 1420 and may perform various data processing or computations.

As at least part of the data processing or computations, the processor 1420 may load a command or data received from another component (e.g., the sensor module 1476 or the communication module 1490) in volatile memory 1432, process the command or the data stored in the volatile memory 1432, and store resulting data in non-volatile memory 1434. The processor 1420 may include a main processor 1421 (e.g., a central processing unit (CPU) or an application processor (APr), and an auxiliary processor 1423 (e.g., a graphics processing unit (GPU), an image signal processor (ISP), a sensor hub processor, or a communication processor (CP)) that is operable independently from, or in conjunction with, the main processor 1421. Additionally or alternatively, the auxiliary processor 1423 may be adapted to consume less power than the main processor 1421, or execute a particular function. The auxiliary processor 1423 may be implemented as being separate from, or a part of, the main processor 1421.

The auxiliary processor 1423 may control at least some of the functions or states related to at least one component (e.g., the display device 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). The auxiliary processor 1423 (e.g., an image signal processor or a communication processor) may be implemented as part of another component (e.g., the camera module 1480 or the communication module 1490) functionally related to the auxiliary processor 1423.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434. Non-volatile memory 1434 may include internal memory 1436 and/or external memory 1438.

The program 1440 may be stored in the memory 1430 as software, and may include, for example, an operating system (OS) 1442, middleware 1444, or an application 1446.

The input device 1450 may receive a command or data to be used by another component (e.g., the processor 1420) of the electronic device 1401, from the outside (e.g., a user) of the electronic device 1401. The input device 1450 may include, for example, a microphone, a mouse, or a keyboard.

The sound output device 1455 may output sound signals to the outside of the electronic device 1401. The sound output device 1455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1460 may visually provide information to the outside (e.g., a user) of the electronic device 1401. The display device 1460 may include, for example, a display, a hologram device, or a projector and control circuitry to control a corresponding one of the display, hologram device, and projector. The display device 1460 may include touch circuitry adapted to detect a touch, or sensor circuitry (e.g., a pressure sensor) adapted to measure the intensity of force incurred by the touch.

The audio module 1470 may convert a sound into an electrical signal and vice versa. The audio module 1470 may obtain the sound via the input device 1450 or output the sound via the sound output device 1455 or a headphone of an external electronic device 1402 directly (e.g., wired) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. The sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device 1402 directly (e.g., wired) or wirelessly. The interface 1477 may include, for example, a high-definition multimedia interface (HDMI), a universal serial bus (USB) interface, a secure digital (SD) card interface, or an audio interface.

A connecting terminal 1478 may include a connector via which the electronic device 1401 may be physically connected with the external electronic device 1402. The connecting terminal 1478 may include, for example, an HDMI connector, a USB connector, an SD card connector, or an audio connector (e.g., a headphone connector).

The haptic module 1479 may convert an electrical signal into a mechanical stimulus (e.g., a vibration or a movement) or an electrical stimulus which may be recognized by a user via tactile sensation or kinesthetic sensation. The haptic module 1479 may include, for example, a motor, a piezoelectric element, or an electrical stimulator.

The camera module 1480 may capture a still image or moving images. The camera module 1480 may include one or more lenses, image sensors, image signal processors, or flashes. The power management module 1488 may manage power supplied to the electronic device 1401. The power management module 1488 may be implemented as at least part of, for example, a power management integrated circuit (PMIC).

The battery 1489 may supply power to at least one component of the electronic device 1401. The battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the AP) and supports a direct (e.g., wired) communication or a wireless communication. The communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as BLUETOOTH^{™}, wireless-fidelity (Wi-Fi) direct, or a standard of the Infrared Data Association (IrDA)) or the second network 1499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The antenna module 1497 may transmit or receive a signal or power to or from the outside (e.g., the external electronic device) of the electronic device 1401. The antenna module 1497 may include one or more antennas, and, therefrom, at least one antenna appropriate for a communication scheme used in the communication network, such as the first network 1498 or the second network 1499, may be selected, for example, by the communication module 1490 (e.g., the wireless communication module 1492). The signal or the power may then be transmitted or received between the communication module 1490 and the external electronic device via the selected at least one antenna.

Commands or data may be transmitted or received between the electronic device 1401 and the external electronic device 1404 via the server 1408 coupled with the second network 1499. Each of the electronic devices 1402 and 1404 may be a device of a same type as, or a different type, from the electronic device 1401. All or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1401. The electronic device 1401 may provide the outcome, with or without further processing of the outcome, as at least part of a reply to the request. To that end, a cloud computing, distributed computing, or client-server computing technology may be used, for example.

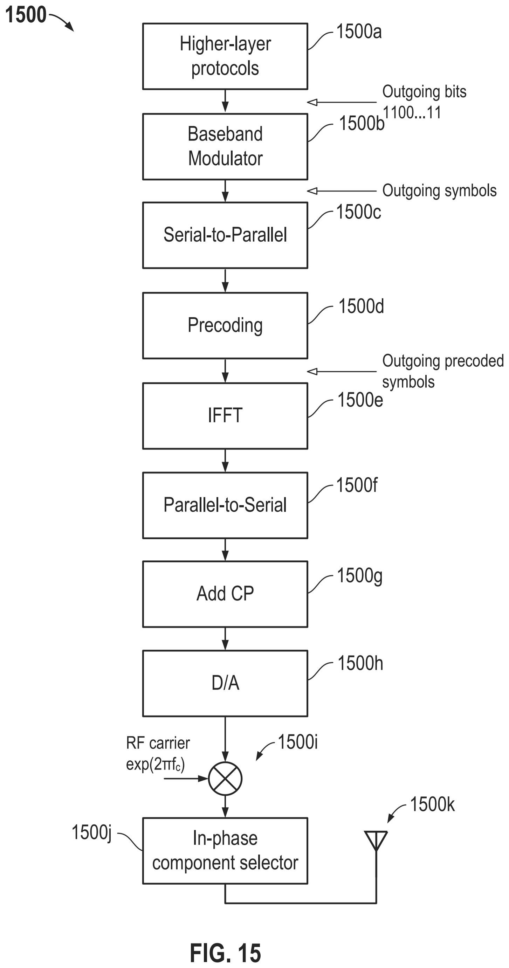

FIG. 15 is a block diagram of a transmitter 1500 of an AP according to an embodiment. As shown in FIG. 15, the transmitter 1500 may be a simplified depiction for the sake of discussion.

Referring to FIG. 15, the transmitter 1500 is shown as including a higher-layer protocol block 1500a that is communicatively coupled with a baseband modulator 1500b. The baseband modulator 1500c is configured to receive outgoing bits provided by the higher-layer protocol 1500a. The baseband modulator 1500b may receive the outgoing bits and provide outgoing symbols that are based on the received outgoing bits. The baseband modulator 1500b may be coupled with a serial-to-parallel (S/P) converter 1500c, which may be configured to receive a serial stream of the outgoing symbols from the baseband modulator 1500b. The S/P converter 1500c can convert the serial stream of the outgoing symbols into a parallel stream of the outgoing symbols. A precoding 1500d is communicatively coupled with a S/P converter 1500c and can receive a parallel stream of the outgoing symbols. The precoding 1500d can provide a parallel stream of weighted symbols. The IFFT 1500e can provide the time domain weighted symbols to the parallel-to-serial (P/S) converter 1500f to provide a serial output of the time domain discrete value. An add CP 1500g block may be communicatively coupled with the P/S converter 1500f and a D/A 1500h converter. A mixer 1500i may be communicatively coupled with the D/A 1500h converter and an in-phase component selector 1500j. A transmit antenna 1500k may be communicatively coupled with the in-phase selector 1500j. The higher layer protocol 1500a provides a serial bit stream of outgoing bits to be transmitted to an STA.

The transmitter 1500 may also include a baseband modulator 1500b that can receive the bits provided by the higher layer protocol 1500a. The baseband modulator 1500b may implement a bit group to modulation symbol s mapping. For example, a bit stream comprising groups of 4, 8, 12, or the like, bits of the bit stream can be mapped to a symbol according to, for example, a standard. An exemplary standard may be quadrature amplitude modulation (QAM), which employs symbols comprising a complex value of in-phase (I) and quadrature components (Q) that can appear as point in an I-Q plane. Accordingly, converting the serial bit stream may be converted into complex-valued symbols *d = I + jQ* using QAM constellation mapping. The modulation order (e.g., 256-QAM, 1024-QAM, 4096-QAM) determines the number of bits mapped to each symbol d and a density of the constellation. The baseband modulator 1500b can provide outgoing symbols d as a serial stream in the digital domain.

The S/P 1500c can receive the serial stream of the outgoing symbols d and convert the serial stream into parallel streams of complex values. The S/P 1500c can receive the serial stream of the outgoing symbols d to distribute to respective parallel subcarriers. For an OFDM system with *N* subcarriers, the S/P 1500c can group each *N* consecutive symbols and assign them in parallel to the *N* subcarrier positions for further processing. The subcarriers are indexed by *k* and therefore the parallel symbols provided by the S/P 1500c can be referred to as symbols *d*(*k*)*.*

The precoding 1500d can apply a frequency-selective beamforming by multiplying each symbol *d*(*k*) by a precoding matrix *P(k).* As noted above, the *k* index is used to indicate that the precoding is performed on a subcarrier *k* basis. The symbols *d*(*k*) operated on by the precoding matrix *P(k)* may be referred to as weighted symbols *w*(*k*)*.* Mathematically, the weighted symbols *w*(*k*) can be determined according to the following Equation [6]: $w \left(k\right) = P \left(k\right) \times d \left(k\right) ;$ although any suitable equation, relationship, or the like may be employed. Accordingly, with reference to the QAM constellation symbols described above, the precoding 1500d can provide QAM symbols modulated by the precoding matrix *P(k).* For a system with *N_{TX}* number of transmit antennas *Tx* and *N_{SS}* number of spatial streams *ss,* the precoding matrix *P(k)* at subcarrier *k* may be an *N_{TX}* × *N_{SS}* matrix.

The IFFT 1500e can receive *N* parallel inputs comprising, with reference to the description of the precoding 1500d, the frequency domain weighted symbols w(k). The IFFT 1500e can perform a frequency-to-time domain conversion independently for each transmit antenna *Tx.* That is, the IFFT 1500e may be for a particular transmit antenna *Txₙ.* Accordingly, the IFFT 1500e can transform these *N* frequency-domain weighted symbols *wₙ*(*k*) into *N* time-domain discrete values *xₙ*[*t*] for a given transmit antenna *Txₙ.* This process may be repeated for each of the *N_{TX}* transmit antennas *Tx.*

The P/S converter 1500f can receive the *N* time-domain symbols *xₙ*[*t*] from the IFFT 1500e for each transmit antenna *Txₙ.* The *N* time-domain discrete values *xₙ*[*t*] may correspond to one OFDM symbol period. The P/S converter 1500f can convert the *N* time-domain discrete values *xₙ*[*t*] into a serial sequence. The serial sequence comprises time-domain discrete values *xₙ*[0] through *xₙ*[*N -* 1] sequentially output to a given transmit antenna *Txₙ.*

The add CP 1500g block can receive the serial sequence of time-domain discrete values *xₙ*[*t*] and adds a cyclic prefix. The output of the add CP 1500g block may be a cyclic-prefixed OFDM symbol in discrete-time digital form. The D/A 1500h converter can convert the cyclic-prefixed OFDM symbol to an analog baseband waveform, which is provided to a mixer 1500i for upconverting. The mixer 1500i receives the analog baseband signal from the D/A 1500h converter and a carrier signal at a carrier frequency *f_{c}*. The mixer 1500i can upconvert the analog baseband signal to a radio frequency signal by multiplying the analog baseband signal with the carrier signal. An in-phase component selector 1500j can extract the in-phase component of the upconverted radio frequency signal. The transmit antenna 1500k may transmit the in-phase component, although other systems may additionally or alternatively employ the complex component.

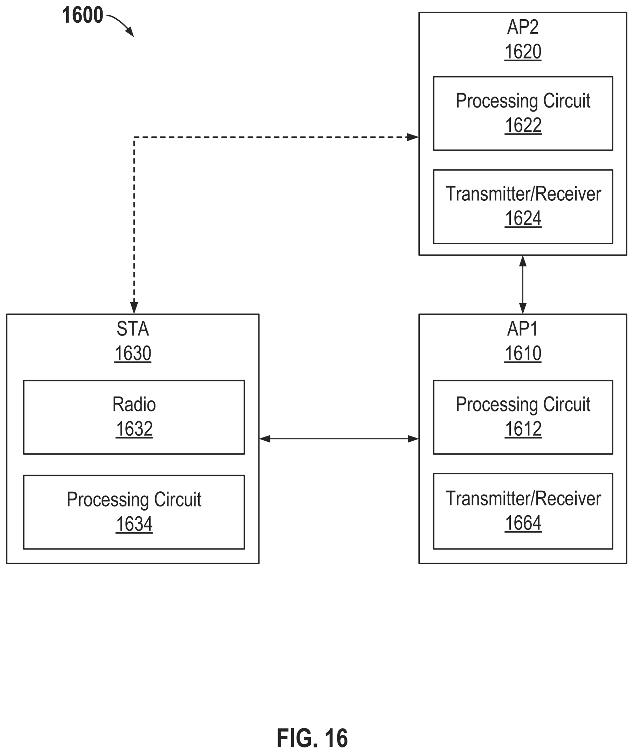

FIG. 16 shows a system 1600 including an AP1 1610, an AP2 1620, and a STA 1630. As shown in FIG. 16, the AP1 1610 is communicatively coupled with the STA 1630 illustrated by a solid line. The AP1 1610 may be communicatively coupled with the STA 1630 via wireless uplinks and/or downlinks. The AP1 1610 and the AP2 1620 are also communicatively coupled with each other as is also illustrated by a solid line. The AP1 1610 and the AP2 1620 may be communicatively coupled with each other through backhaul connections, fronthaul wireless communications, and/or etc. The AP2 1620 and the STA 1630 are not shown as being communicatively coupled but instead include some transmissions, direct or indirect between the AP2 1620 and the STA 1630 as is illustrated by the dashed arrow line.

With reference to FIGS. 1 and 16, the AP1 1610 and the STA 1630 may be considered associated with each other and thus be part of a BSS. For example, the STA 1630 may be the STA2 shown in FIG. 1. Accordingly, the BSS that includes the AP1 1610 and the STA 1630 shown in FIG. 16 may overlap with another BSS that includes the AP2 1620 and thus may be an OBSS. The AP2 1620 may therefore, for example, overhear communications between the AP1 1610 and the STA 1630 even though the AP2 1620 may not be communicatively coupled with (e.g., associated with) the STA 1630.

The AP1 1610 and the AP2 1620 may be any suitable combination of hardware and/or software that can provide wireless services to the STA 1630. For example, the AP1 1610 and the AP2 1620 may respectively be comprised of a processing circuit 1612, 1622 and a transmitter/receiver 1614, 1624. The processing circuits 1612, 1622 may be any suitable combination of circuits, registers, code, and/or the like that can perform computations, such as, for example, those described herein. Additionally or alternatively, the AP1 1610 and the AP2 1620 may be comprised of antennas (e.g., in one or more antenna arrays) for communications with, for example, the STA 1630 and/or each other, a wired network interface to a router or switch, and/or the like. It should be appreciated that the term "access point" may be interchangeable with other terms such as "base station", Next-Generation Node B (gNB), etc.

The STA 1630 may include a radio 1632 and a processing circuit 1634. The radio 1632 which may perform various methods disclosed herein. For example, the processing circuit 1634 may receive, via the radio 1632, transmissions from the AP1 1610, and the processing circuit 1634 may transmit, via the radio 1632, signals to the AP1 1610. Accordingly, the AP1 1610 can transmit, for example, packets with or without data (e.g., symbols) via a transmission (e.g., across specific spatial stream) from the AP1 1610 to the STA 1630.

It should also be appreciated that the AP2 1620 can also transmit to the STA 1630 even though the AP2 1620 and the STA 1630 may not be associated. For example, the AP1 1610 and/or the AP2 1620 may transmit an NDPA to coordinate sequential and/or simultaneous transmissions from AP1 1610 and/or AP2 1620 to the STA 1630 as is described in the foregoing. By way of illustration, based on the NDPA, the AP1 1610 and/or the AP2 1620 can transmit an NDP, simultaneously, sequentially, or individually, to the STA 1630.

The AP1 1610 and AP2 1620 may require frequency synchronization. Accordingly, the AP2 1620 may receive an NDPA sent by the AP1 1610. The AP2 1620 can estimate a carrier frequency, such as a nominal carrier frequency of the AP1 1610 from the NDPA. The AP2 1620 can estimate the carrier frequency of the AP1 1610 based on the signal characteristics of the NDPA. For example, the AP2 1620 may determine a frequency offset or the like based on the estimated carrier frequency of the AP1 1610. Accordingly, the AP2 1620 can modify its carrier frequency to match the estimated carrier frequency of the AP1 1610.

Additionally, or alternatively, the AP2 1620 can transmit an NDPA and a subsequent NDP for the STA 1605 or joint sounding with another STA and the AP1 1610. For example, an AP2 NDP sent by the AP2 1620 may be transmitted at a modified AP2 carrier frequency. Additionally, or alternatively, the AP2 1620 may transmit an AP2 NDPA at an AP2 carrier frequency that may or may not be based on an estimated AP1 carrier frequency. The AP1 1610 can receive the NDPA to estimate the AP2 carrier frequency *f*_{*c*2} of the AP2 1620. The AP1 1610 may also adjust its AP1 carrier frequency *f*_{*c*1} to match the estimated AP2 carrier frequency *f*_{*c*2} of the AP2 1620. Additionally, or alternatively, the AP1 1610 and/or the AP2 1620 can also transmit triggers (e.g., a data transmission trigger frame) that can be used by the other AP to further align the carrier frequencies of the AP 1610 and the other AP for subsequent data transmissions that can include frequency alignment.

Accordingly, as described in the foregoing with reference to FIGS 4 through 7, the NDPA and the data transmission trigger frames described above may be referred to as "frequency reference frames" and the NDP or data transmission frames that are transmitted with a modified carrier frequency may be referred to as "frequency alignment frames." That is, the NDPA and data transmission trigger frames can provide a reference carrier frequency an AP can use to estimate a carrier frequency related value (e.g., a carrier frequency value, a frequency difference offset, etc.) that can be used to modify the AP's carrier frequency. The frequency alignment frame can be a transmission, such as an NDP or data transmission, at the modified carrier frequency.

The system 1600 may also perform sounding reuse for SU-MIMO, MU-MIMO, and/or Co-BF. For example, as explained above, the prior sounding results may include CSI feedback matrices *V(k)* obtained using various modes. A CSI feedback matrices *V*(*k*) obtained using a given mode may be used for beamforming in the same or a different mode, depending on various configurations, such as suitable feedback formats and/or mechanisms. If a sounding result can be reused, then performing a sounding sequence may not be required which can be advantageous in various contexts. Whether or not a sounding result can be reused may depend on whether the prior sounding results are considered sufficiently aligned with each other and/or a possible carrier frequency (e.g., a carrier frequency determined based on a carrier frequency precorrection value as described above) used for beamforming.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. A method comprising:
transmitting (1210), with a first access point, AP1, (1610) an AP1 frequency reference frame at an AP1 carrier frequency *f*_{*c*1};
obtaining (1220), with a second access point, AP2, (1620) a synchronized AP2 carrier frequency *f*_{*c*2} based on the AP1 carrier frequency *f*_{*c*1}; and
transmitting (1230), with the AP2, an AP2 frequency alignment frame using the synchronized AP2 carrier frequency *t*_{*c*2}.

2. The method of claim 1, wherein:
the AP1 frequency reference frame is one of an AP1 null data packet announcement, NDPA, frame for a sounding sequence and a data transmission trigger frame for a data transmission sequence; and
the AP2 frequency alignment frame comprises one of an AP2 null data packet, NDP, for the sounding sequence and an AP2 data transmission frame for the data transmission sequence.

3. The method of claim 1 or 2, further comprising transmitting, with the AP1 (1610), one of an AP1 NDP and an AP1 data transmission frame at the AP1 carrier frequency *f*_{*c*1} to a station, STA.

4. The method of claim 3, wherein the one of the AP1 NDP and the AP1 data transmission frame is transmitted at zero power to verify that the AP2 frequency alignment frame is transmitted with the synchronized AP2 carrier frequency *t*_{*c*2}.

5. The method of any one of claims 1 to 4, further comprising obtaining, with the AP2 (1620), the synchronized AP2 carrier frequency *f*_{*c*2} based on the AP1 carrier frequency *f*_{*c*1} by:
receiving, with the AP2 (1620), the AP1 frequency reference frame transmitted by the AP1 (1610);
estimating, with the AP2 (1620), the AP1 carrier frequency *f*_{*c*1} based on the received AP1 frequency reference frame; and
modifying, with the AP2 (1620), the AP2 carrier frequency *f*_{*c*2} to match the AP1 carrier frequency *f*_{*c*1}.

6. The method of claim 5, wherein estimating, with the AP2 (1620), the AP1 carrier frequency *f*_{*c*1} comprises determining, with the AP2 (1620), a frequency difference offset *fd_{offset}* between the AP1 carrier frequency *f*_{*c*1} and the AP2 carrier frequency *t*_{*c*2}.

7. The method of claim 6, further comprising storing, with the AP2 (1620), the frequency difference offset *fd_{offset}* as a frequency delta tag *f_{d}.*

8. The method of any one of claims 1 to 7, wherein the AP1 frequency reference frame includes an explicit request that the AP2 (1620) synchronize the AP2 carrier frequency *f*_{*c*2} to the AP1 carrier frequency *f*_{*c*1}.

9. The method of any one of claims 1 to 8, further comprising:
determining (1310), with the AP1 (1610), an alignment of the AP1 carrier frequency *f*_{*c*1} relative to prior sounding results; and
transmitting (1320), with the AP1 (1610), an AP1 data transmission frame using the AP1 carrier frequency *f*_{*c*1} and a sounding result of the prior sounding results.

10. The method of claim 9, wherein determining (1310), with the AP1 (1610), the alignment of the AP1 carrier frequency *f*_{*c*1} relative to the prior sounding results comprises comparing, with the AP1 (1610), the AP1 carrier frequency *f*_{*c*1} to at least one of the prior sounding results.

11. The method of claim 9 or 10, wherein determining, with the AP1 (1610), the alignment of the AP1 carrier frequency f_{*c*1} relative to prior sounding results comprises comparing at least one frequency delta tag *f_{d}* of the sounding results to a frequency delta tolerance *fₜ.*

12. The method of claim 11, wherein the comparison of the at least one frequency delta tag *t_{d}* of the sounding results to a frequency delta tolerance *fₜ* comprises comparing:
a difference between the maximum value of the at least one frequency delta tag *f_{d}* of the sounding results and a frequency delta tolerance *fₜ*; and
a difference between the minimum value of the at least one frequency delta tag *f_{d}* of the sounding results and the frequency delta tolerance *fₜ.*

13. The method of claim 11 or 12, wherein determining, with the AP1 (1610), the alignment of the AP1 carrier frequency *f*_{*c*1} relative to prior sounding results comprises determining, with the AP1 (1610), an AP1 carrier frequency *f*_{*c*1} value that minimizes realignments of the prior sounding results.

14. The method of any one of claims 9 to 13, wherein the AP1 frequency reference frame for the transmission sequence includes a packet extension configured to provide sufficient time for the AP2 (1620) to determine an alignment of the AP2 sounding results relative to the AP1 carrier frequency *f*_{*c*1}.

15. The method of any one of claims 9 to 14, further comprising determining, with the AP2 (1620), an alignment of the AP2 sounding results with the AP1 carrier frequency *f*_{*c*1} by synchronizing the AP2 carrier frequency *f*_{*c*2} to the AP1 carrier frequency *f*_{*c*1}.
